(19) Europäisches Patentamt
European Patent Office
Office européen des brevets

(11) **EP 4 398 404 A1**

(12) **EUROPEAN PATENT APPLICATION**
published in accordance with Art. 153(4) EPC

(43) Date of publication:
**10.07.2024 Bulletin 2024/28**

(21) Application number: **22864670.9**

(22) Date of filing: **31.08.2022**

(51) International Patent Classification (IPC):
*H01M 50/449* (2021.01)      *C08L 25/00* (2006.01)
*C08L 33/04* (2006.01)       *C08L 51/06* (2006.01)
*C08L 101/14* (2006.01)      *H01M 50/403* (2021.01)
*H01M 50/414* (2021.01)      *H01M 50/42* (2021.01)
*H01M 50/443* (2021.01)      *H01M 50/451* (2021.01)
*H01M 50/457* (2021.01)      *H01M 50/489* (2021.01)

(52) Cooperative Patent Classification (CPC):
C08L 25/00; C08L 33/04; C08L 51/06;
C08L 101/14; H01M 50/403; H01M 50/414;
H01M 50/42; H01M 50/443; H01M 50/449;
H01M 50/451; H01M 50/457; H01M 50/489;
Y02E 60/10

(86) International application number:
**PCT/JP2022/032881**

(87) International publication number:
**WO 2023/033088 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **31.08.2021   JP 2021141961
28.02.2022   JP 2022030445**

(71) Applicant: **Zeon Corporation
Tokyo 100-8246 (JP)**

(72) Inventor: **YAMADA Tomofumi
Tokyo 100-8246 (JP)**

(74) Representative: **Maiwald GmbH
Elisenhof
Elisenstraße 3
80335 München (DE)**

(54) **SLURRY COMPOSITION FOR NONAQUEOUS SECONDARY BATTERY ADHESIVE LAYER, NONAQUEOUS SECONDARY BATTERY ADHESIVE LAYER AND MANUFACTURING METHOD THEREFOR, NONAQUEOUS SECONDARY BATTERY MEMBER, AND NONAQUEOUS SECONDARY BATTERY**

(57)   Provided is a slurry composition for a non-aqueous secondary battery adhesive layer containing at least two types of particulate polymers, a water-soluble polymer, and a dispersion medium. The at least two types of particulate polymers include a particulate polymer A having a glass-transition temperature of not lower than 30°C and not higher than 100°C and a particulate polymer B having a glass-transition temperature of 20°C or lower. The slurry composition for a non-aqueous secondary battery adhesive layer has a solid content concentration of not less than 1 mass% and not more than 25 mass%.

EP 4 398 404 A1

**Description**

TECHNICAL FIELD

The present disclosure relates to a slurry composition for a non-aqueous secondary battery adhesive layer, an adhesive layer for a non-aqueous secondary battery and method of producing the same, a member for a non-aqueous secondary battery, and a non-aqueous secondary battery.

BACKGROUND

Non-aqueous secondary batteries (hereinafter, also referred to simply as "secondary batteries"), such as lithium ion secondary batteries, have characteristics such as compact size, light weight, high energy density, and the ability to be repeatedly charged and discharged, and are used in a wide variety of applications. A secondary battery generally includes battery members such as a positive electrode, a negative electrode, and a separator that isolates the positive electrode and the negative electrode from each other and prevents short-circuiting between the positive and negative electrodes.

In recent years, battery members including a porous membrane layer with the aim of improving heat resistance and strength, an adhesive layer with the aim of improving adhesiveness between battery members, or the like have been used in secondary batteries.

Specifically, electrodes that further include an adhesive layer formed on an electrode substrate in which an electrode mixed material layer is provided on a current collector and separators that include an adhesive layer formed on a separator substrate have been used as battery members. Such an adhesive layer is typically formed by supplying a composition for a non-aqueous secondary battery adhesive layer (hereinafter, also referred to simply as a "composition for an adhesive layer") in the form of a slurry containing a binder component and a dispersion medium such as water onto an appropriate substrate such as an electrode substrate or a separator substrate, and then drying the composition for an adhesive layer (for example, refer to Patent Literature (PTL) 1).

PTL 1 proposes a composition for a non-aqueous secondary battery adhesive layer that satisfies specific shear viscosity conditions and that contains organic particles and a water-soluble polymer having a viscosity within a specific range when in the form of a 1 mass% aqueous solution. PTL 2 proposes a separator for a secondary battery including an adhesive layer that contains a particulate polymer having a glass-transition temperature of 10°C to 100°C.

CITATION LIST

Patent Literature

    PTL 1: WO2017/090242A1
    PTL 2: WO2013/151144A1

SUMMARY

(Technical Problem)

However, there is room for further improvement of the uniformity of an adhesive layer formed using the composition for an adhesive layer described in each of PTL 1 and 2, and, consequently, there is room for further reduction of internal resistance of an obtained non-aqueous secondary battery.

Accordingly, one object of the present disclosure is to provide a slurry composition for a non-aqueous secondary battery adhesive layer with which it is possible to form an adhesive layer that has excellent uniformity and can reduce internal resistance of an obtained non-aqueous secondary battery.

Another object of the present disclosure is to provide an adhesive layer for a non-aqueous secondary battery that has excellent uniformity and can reduce internal resistance of a non-aqueous secondary battery and also to provide a method of producing this adhesive layer for a non-aqueous secondary battery.

Another object of the present disclosure is to provide a member for a non-aqueous secondary battery that can provide a non-aqueous secondary battery having low internal resistance.

Another object of the present disclosure is to provide a non-aqueous secondary battery having low internal resistance.

(Solution to Problem)

The inventor conducted extensive studies in view of the points set forth above, and, by focusing on the fact that the components and solid content concentration of a slurry composition for an adhesive layer significantly influence the uniformity of an obtained adhesive layer and the internal resistance of a non-aqueous secondary battery including the adhesive layer, completed the present disclosure.

[1] Specifically, the present disclosure aims to advantageously solve the problem set forth above, and a presently disclosed slurry composition for a non-aqueous secondary battery adhesive layer comprises: at least two types of particulate polymers; a water-soluble polymer; and a dispersion medium, wherein the at least two types of particulate polymers include a particulate polymer A having a glass-transition temperature of not lower than 30°C and not higher than 100°C and a particulate polymer B having a glass-transition temperature of 20°C or lower, and the slurry composition for a non-aqueous secondary battery adhesive layer has a solid content concentration of not less than 1 mass% and not more than 25 mass%. The slurry composition for a non-aqueous secondary battery adhesive layer set forth above is capable of forming an adhesive layer that has excellent uniformity and that can reduce internal resistance of an obtained non-aqueous secondary battery.
The glass-transition temperature of a polymer referred to in the present specification can be measured by a method described in the EXAMPLES section. Moreover, when a polymer is said to be "water-soluble" in the present specification, this means that when 0.5 g of the substance is dissolved in 100 g of water at 25°C, insoluble content is less than 1.0 mass%.
[2] In the slurry composition for a non-aqueous secondary battery adhesive layer according to the foregoing [1], the particulate polymer A preferably includes a (meth)acrylic acid ester monomer unit. When the particulate polymer A includes a (meth)acrylic acid ester monomer unit, swelling of an obtained non-aqueous secondary battery can be suppressed. Note that in the present specification, "(meth)acryl" is used to indicate "acryl" and/or "methacryl". Moreover, in the present specification, the expression "includes a monomer unit" means that "a structural unit derived from the monomer is included in a polymer obtained using the monomer".
[3] In the slurry composition for a non-aqueous secondary battery adhesive layer according to the foregoing [1] or [2], the particulate polymer B is preferably a styrenic polymer or an acrylic polymer. When the particulate polymer B is a styrenic polymer or an acrylic polymer, this results in even better uniformity and enables further reduction of internal resistance of an obtained non-aqueous secondary battery.
[4] In the slurry composition for a non-aqueous secondary battery adhesive layer according to any one of the foregoing [1] to [3], the water-soluble polymer preferably includes an acid group-containing monomer unit in a proportion of not less than 5 mass% and not more than 50 mass%. When the water-soluble polymer includes an acid group-containing monomer unit, uniformity of an obtained adhesive layer can be further increased. Note that the proportional content of a monomer unit can be measured by a nuclear magnetic resonance (NMR) method such as $^1$H-NMR.
[5] The presently disclosed slurry composition for a non-aqueous secondary battery adhesive layer according to any one of the foregoing [1] to [4] preferably has a pH of not lower than 7 and not higher than 9. When the pH is not lower than 7 and not higher than 9, this results in even better uniformity and enables further reduction of internal resistance of an obtained non-aqueous secondary battery.
[6] The slurry composition for a non-aqueous secondary battery adhesive layer according to any one of the foregoing [1] to [5] may further comprise either or both of a preservative and a defoamer. This makes it possible to impart desired attributes to the slurry composition.
[7] In the slurry composition for a non-aqueous secondary battery adhesive layer according to any one of the foregoing [1] to [6], it is preferable that the particulate polymer A has a core-shell structure and, when all repeating units forming a shell portion are taken to be 100 mass%, includes a (meth)acrylic acid ester monomer unit in a proportion of 30.0 mass% or more. When the particulate polymer A is a core-shell polymer including a shell portion that satisfies the chemical composition condition set forth above, electrolyte solution injectability and cycle durability of an obtained secondary battery can be increased.
[8] In the slurry composition for a non-aqueous secondary battery adhesive layer according to any one of the foregoing [1] to [7], it is preferable that the particulate polymer A has a core-shell structure and that a shell portion includes, as repeating units, a methyl methacrylate unit and a methyl acrylate unit as (meth)acrylic acid ester monomer units and a carboxy group-containing monomer unit as an acid group-containing monomer unit. When the particulate polymer A is a core-shell polymer including a shell portion that satisfies the chemical composition condition set forth above, electrolyte solution injectability and cycle durability of an obtained secondary battery can be increased.
[9] Moreover, the present disclosure aims to advantageously solve the problem set forth above, and a presently disclosed adhesive layer for a non-aqueous secondary battery is formed using the slurry composition for a non-aqueous secondary battery adhesive layer according to any one of the foregoing [1] to [8]. The adhesive layer for a non-aqueous secondary battery set forth above has excellent uniformity and can reduce internal resistance of a secondary battery.

[10] Furthermore, the present disclosure aims to advantageously solve the problem set forth above, and a presently disclosed method of producing an adhesive layer for a non-aqueous secondary battery comprises applying the slurry composition for a non-aqueous secondary battery adhesive layer according to any one of the foregoing [1] to [8] onto a substrate by gravure coating or slot-die coating. Through the production method set forth above, it is possible to efficiently produce the presently disclosed adhesive layer for a non-aqueous secondary battery.

[11] Also, the present disclosure aims to advantageously solve the problem set forth above, and a presently disclosed member for a non-aqueous secondary battery comprises the adhesive layer for a non-aqueous secondary battery according to the foregoing [9] on a substrate. By using the member for a non-aqueous secondary battery set forth above, it is possible to provide a non-aqueous secondary battery having low internal resistance.

[12] In the member for a non-aqueous secondary battery according to the foregoing [11], it is preferable that the substrate includes an organic separator material and that the adhesive layer for a non-aqueous secondary battery is disposed adjacently to at least one surface of the organic separator material or is disposed adjacently to a surface of a heat-resistant layer that is included on at least one surface of the organic separator material. By using the member for a non-aqueous secondary battery set forth above, it is possible to provide a non-aqueous secondary battery having even lower internal resistance.

[13] Moreover, the present disclosure aims to advantageously solve the problem set forth above, and a presently disclosed non-aqueous secondary battery comprises the member for a non-aqueous secondary battery according to the foregoing [11] or [12]. As a result of the presently disclosed member for a non-aqueous secondary battery being included in a secondary battery in this manner, it is possible to reduce internal resistance of the secondary battery.

(Advantageous Effect)

According to the present disclosure, it is possible to provide a slurry composition for a non-aqueous secondary battery adhesive layer with which it is possible to form an adhesive layer that has excellent uniformity and can reduce internal resistance of an obtained non-aqueous secondary battery.

Moreover, according to the present disclosure, it is possible to provide an adhesive layer for a non-aqueous secondary battery that has excellent uniformity and can reduce internal resistance of a non-aqueous secondary battery and also to provide a method of producing this adhesive layer for a non-aqueous secondary battery.

Furthermore, according to the present disclosure, it is possible to provide a member for a non-aqueous secondary battery that can provide a non-aqueous secondary battery having low internal resistance.

Also, according to the present disclosure, it is possible to provide a non-aqueous secondary battery having low internal resistance.

DETAILED DESCRIPTION

The following provides a detailed description of embodiments of the present disclosure.

The presently disclosed slurry composition for a non-aqueous secondary battery adhesive layer is used with the aim of forming an adhesive layer for adhering battery members to each (for example, adhering a separator and an electrode) or for adhering constituent elements of a battery member to each other (for example, adhering a separator substrate and a heat-resistant layer).

Moreover, the presently disclosed adhesive layer for a non-aqueous secondary battery is formed using the aforementioned slurry composition for a non-aqueous secondary battery adhesive layer and is preferably formed according to the presently disclosed method of producing an adhesive layer for a non-aqueous secondary battery. Furthermore, the presently disclosed member for a non-aqueous secondary battery is a member that includes at least the presently disclosed adhesive layer for a non-aqueous secondary battery. Also, the presently disclosed non-aqueous secondary battery includes at least the presently disclosed member for a non-aqueous secondary battery.

(Slurry composition for non-aqueous secondary battery adhesive layer)

The slurry composition for a non-aqueous secondary battery adhesive layer contains at least two types of particulate polymers, a water-soluble polymer, and a dispersion medium and optionally contains other components. More specifically, the slurry composition contains a particulate polymer A having a glass-transition temperature of not lower than 30°C and not higher than 100°C, a particulate polymer B having a glass-transition temperature of 20°C or lower, and a water-soluble polymer. The slurry composition also has, as a feature thereof, a solid content concentration of not less than 1 mass% and not more than 25 mass%.

Moreover, an adhesive layer that is formed using the presently disclosed slurry composition for a non-aqueous secondary battery adhesive layer has excellent uniformity and can reduce internal resistance of a secondary battery including the adhesive layer. A secondary battery that has low internal resistance has excellent fast charging performance.

<Particulate polymer A>

The particulate polymer A that is contained in the slurry composition is required to have a glass-transition temperature of not lower than 30°C and not higher than 100°C. The particulate polymer A has a function of causing an adhesive layer that has been formed using the slurry composition for a non-aqueous secondary battery adhesive layer to display adhesiveness. The particulate polymer A preferably includes a (meth)acrylic acid ester monomer unit. When the particulate polymer A includes a (meth)acrylic acid ester monomer unit, swelling of an obtained non-aqueous secondary battery can be suppressed well. Moreover, the particulate polymer A may include an acid group-containing monomer unit. When the particulate polymer A includes an acid group-containing monomer unit, coatability of the slurry composition for a non-aqueous secondary battery adhesive layer can be improved. When the slurry composition for an adhesive layer has excellent coatability, the occurrence of streaks or unevenness in a formed coating film can be suppressed.

[(Meth)acrylic acid ester monomer unit]

Examples of (meth)acrylic acid ester monomers that can form a (meth)acrylic acid ester monomer unit include (meth)acrylic acid ester monomers such as methyl (meth)acrylate, ethyl (meth)acrylate, butyl (meth)acrylate, and 2-ethylhexyl acrylate. One of these (meth)acrylic acid ester monomers may be used individually, or two or more of these (meth)acrylic acid ester monomers may be used in combination in a freely selected ratio.

The proportional content of (meth)acrylic acid ester monomer units in the particulate polymer A when all monomer units included in the particulate polymer A are taken to be 100 mass% is preferably 15 mass% or more, more preferably 30 mass% or more, and even more preferably 60 mass% or more, and is preferably 99.0 mass% or less, and more preferably 95.0 mass% or less. When the proportional content of (meth)acrylic acid ester monomer units in the particulate polymer A is not less than any of the lower limits set forth above, swelling of an obtained non-aqueous secondary battery can be suppressed.

[Acid group-containing monomer unit]

Examples of acid group-containing monomers that can form an acid group-containing monomer unit include monomers that include an acid group such as carboxy group-containing monomers, sulfo group-containing monomers, phosphate group-containing monomers, and hydroxy group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

Examples of hydroxy group-containing monomers include 2-hydroxyethyl acrylate, 2-hydroxypropyl acrylate, 2-hydroxyethyl methacrylate, and 2-hydroxypropyl methacrylate.

Note that in the present disclosure, "(meth)allyl" is used to indicate "allyl" and/or "methallyl", and "(meth)acryloyl" is used to indicate "acryloyl" and/or "methacryloyl".

One of these acid group-containing monomers may be used individually, or two or more of these acid group-containing monomers may be used in combination in a freely selected ratio.

The proportional content of acid group-containing monomer units in the particulate polymer A when all monomer units included in the particulate polymer A are taken to be 100 mass% is preferably 0.1 mass% or more, more preferably 0.5 mass% or more, and even more preferably 1.0 mass% or more, and is preferably 4.5 mass% or less, and more preferably 4.0 mass% or less. When the proportional content of acid group-containing monomer units in the particulate polymer A is not less than any of the lower limits set forth above, uniformity of an obtained adhesive layer can be further improved. Moreover, when the proportional content of acid group-containing monomer units in the particulate polymer A is not more than any of the upper limits set forth above, internal resistance of an obtained secondary battery can be further reduced.

[Other monomer units]

The particulate polymer A can include monomer units other than the (meth)acrylic acid ester monomer units and acid group-containing monomer units described above without any specific limitations. Examples of monomers that can form such monomer units include aromatic vinyl monomers and cross-linkable monomers. Examples of aromatic vinyl monomers include styrene, $\alpha$-methylstyrene, styrenesulfonic acid, butoxystyrene, and vinylnaphthalene. One of these aromatic vinyl monomers may be used individually, or two or more of these aromatic vinyl monomers may be used in combination in a freely selected ratio. A cross-linkable monomer is a monomer that can form a cross-linked structure during or after polymerization upon heating or irradiation with energy rays. More specifically, a polyfunctional monomer including two or more groups displaying polymerization reactivity in the monomer, for example, may be used as a cross-linkable monomer. Examples of such polyfunctional monomers include divinyl compounds such as divinylbenzene and allyl methacrylate; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; and epoxy group-containing ethylenically unsaturated monomers such as allyl glycidyl ether and glycidyl methacrylate. One of these cross-linkable monomers may be used individually, or two or more of these cross-linkable monomers may be used in combination in a freely selected ratio.
Note that the combination and mixing ratio of the various monomers described above in production of the particulate polymer A can be freely altered in accordance with the intended use of the slurry composition, for example.

-Structure of particulate polymer A-

The particulate polymer A may have any structure. For example, the particulate polymer A may have a core-shell structure including a core portion and a shell portion covering an outer surface of the core portion. Moreover, the shell portion may partially cover the outer surface of the core portion. In other words, the shell portion of the particulate polymer A may cover the outer surface of the core portion without completely covering the outer surface of the core portion. Furthermore, the particulate polymer A may have a nonuniform structure in which the polymer chemical composition differs between a central portion and the surface. Note that it is possible to confirm whether or not the particulate polymer A has a core-shell structure through observation of the particulate polymer using a scanning electron microscope.
In a case in which the particulate polymer A has a core-shell structure, the particulate polymer A may include any constituent elements other than the core portion and the shell portion described above. For example, the particulate polymer A may include a portion inside of the core portion that is formed of a different polymer to the core portion. In one specific example, a residual seed particle may be present inside of the core portion in a situation in which seed particles are used in production of the particulate polymer A by seeded polymerization.
In a case in which the particulate polymer A is a so-called "core-shell polymer" having a core-shell structure, when all repeating units forming the shell portion are taken to be 100 mass%, a (meth)acrylic acid ester monomer unit is preferably included in a proportion of 30.0 mass% or more, more preferably 45.0 mass% or more, and even more preferably 60.0 mass% or more, and is preferably included in a proportion of 99.0 mass% or less, and more preferably 95.0 mass% or less. When the content of (meth)acrylic acid ester monomer units in the shell is not less than any of the lower limits set forth above, electrolyte solution injectability and cycle durability of an obtained secondary battery can be increased. Moreover, when the content of (meth)acrylic acid ester monomer units in the shell is not more than any of the upper limits set forth above, adhesiveness of an obtained non-aqueous secondary battery adhesive layer can be increased.
A methyl methacrylate unit and a methyl acrylate unit are preferable as (meth)acrylic acid ester monomer units included in the shell portion. Moreover, it is more preferable that the shell portion includes both of these units. When the shell portion includes both of these units, electrolyte solution injectability and cycle durability of an obtained secondary battery can be increased.
Moreover, in a case in which the particulate polymer A is a so-called "core-shell polymer" having a core-shell structure, the shell portion preferably includes, as repeating units, a methyl methacrylate unit and a methyl acrylate unit as (meth)acrylic acid ester monomer units and a carboxy group-containing monomer unit as an acid group-containing monomer unit. When the particulate polymer A is a core-shell polymer including a shell portion that satisfies the chemical composition condition set forth above, electrolyte solution injectability and cycle durability of an obtained secondary battery can be increased.
In particular, it is preferable that the shell portion includes a methyl methacrylate unit and a methyl acrylate unit as (meth)acrylic acid ester monomer units and includes a monomer unit derived from any of the previously described monocarboxylic acids as a carboxy group-containing monomer unit, with a monomer unit derived from acrylic acid or methacrylic acid being more preferable, and a monomer unit derived from methacrylic acid even more preferable as a carboxy group-containing monomer unit.
The proportional content of carboxy group-containing monomer units in the shell portion is preferably 0.10 mass% or more, more preferably 0.50 mass% or more, and even more preferably 0.90 mass% or more, and is preferably 4.50 mass% or less, and more preferably 4.00 mass% or less. When the proportional content of carboxy group-containing monomer units in the shell portion is not less than any of the lower limits set forth above, uniformity of an obtained adhesive layer can be further improved. Moreover, when the proportional content of carboxy group-containing monomer units in the shell portion is not more than any of the upper limits set forth above, adhesiveness of an obtained adhesive layer can be increased.

Furthermore, in a case in which the particulate polymer A is a so-called "core-shell polymer" having a core-shell structure, the proportion constituted by a polymer forming the shell portion when the total mass of the core portion and the shell portion is taken to be 100 mass% is preferably 40 mass% or less, and more preferably 35 mass% or less, and is preferably 15 mass% or more, and more preferably 20 mass% or more. When the proportion constituted by the polymer forming the shell portion is not more than any of the upper limits set forth above, adhesiveness of an obtained adhesive layer can be further increased. Moreover, when the proportion constituted by the polymer forming the shell portion is not less than any of the lower limits set forth above, electrolyte solution injectability and cycle durability of an obtained secondary battery can be further increased.

-Volume-average particle diameter of particulate polymer A-

The volume-average particle diameter of the particulate polymer A is preferably 300 nm or more, and more preferably 450 nm or more, and is preferably 900 nm or less, and more preferably 750 nm or less. From a viewpoint of achieving a good balance of adhesiveness and blocking resistance (tendency for blocking not to occur) of an adhesive layer, it is preferable that the volume-average particle diameter of the particulate polymer A is larger than the volume-average particle diameter of the subsequently described particulate polymer B. When the volume-average particle diameter of the particulate polymer A is not less than any of the lower limits set forth above, blocking resistance of an adhesive layer can be increased. Moreover, when the volume-average particle diameter of the particulate polymer A is not more than any of the upper limits set forth above, adhesiveness of an adhesive layer can be increased. Note that the volume-average particle diameter of the particulate polymer A can be measured by a method described in the EXAMPLES section.

-Glass-transition temperature of particulate polymer A-

The glass-transition temperature of the particulate polymer A is required to be not lower than 30°C and not higher than 100°C, is preferably 40°C or higher, and more preferably 55°C or higher, and is preferably 90°C or lower, and more preferably 80°C or lower. When the glass-transition temperature of the particulate polymer A is not lower than any of the lower limits set forth above, it is possible to inhibit adhesion of secondary battery members to each other and the occurrence of blocking when secondary battery members including an adhesive layer at the surface thereof are stacked and stored. Moreover, when the glass-transition temperature of the particulate polymer A is not higher than any of the upper limits set forth above, adhesiveness of an adhesive layer can be increased, and swelling of an obtained secondary battery can be suppressed. Note that in a case such as when the particulate polymer A has the previously described core-shell structure, more than one glass-transition temperature may be detected in glass-transition temperature measurement by a method described in the EXAMPLES section of the present specification. In such a case, the value of a lowest glass-transition temperature is taken to be the glass-transition temperature of the particulate polymer A.

The glass-transition temperature of the particulate polymer A can be adjusted to a desired temperature by altering the chemical composition of the particulate polymer A, for example.

-Production method of particulate polymer A-

The particulate polymer A can be produced by a known polymerization method without any specific limitations. The mode of polymerization may be solution polymerization, suspension polymerization, bulk polymerization, emulsion polymerization, or the like, for example, without any specific limitations. The polymerization method may be ionic polymerization, radical polymerization, living radical polymerization, or the like, for example. In emulsion polymerization, seeded polymerization in which seed particles are used may be adopted. Moreover, in a case in which a particulate polymer A having a core-shell structure is to be produced, a stepwise polymerization method such as continuous multistep suspension polymerization or multistep suspension polymerization in which a polymer formed in a preceding step is then covered by a polymer formed in a subsequent step can be adopted.

An emulsifier, dispersant, polymerization initiator, polymerization aid, or the like used in polymerization may be the same as typically used and the amount thereof may also be the same as typically used.

<Particulate polymer B>

The particulate polymer B that is contained in the slurry composition is required to have a glass-transition temperature of 20°C or lower. The particulate polymer B has a function of, together with the particulate polymer A described above, causing an adhesive layer that has been formed using the slurry composition for a non-aqueous secondary battery adhesive layer to display adhesiveness. Although the particulate polymer B may be any polymer without any specific limitations so long as it can be dispersed in a dispersion medium such as water, a styrenic polymer and an acrylic polymer are, in particular, preferable as the particulate polymer B. This is because even better uniformity is achieved, and internal resistance of an obtained non-aqueous secondary battery can be further reduced. The styrenic polymer may be a polymer in which styrene units constitute a proportion of 50 mass% or more, and preferably more than 60 mass% among all repeating units. More specifically, the styrenic polymer may be a styrene-butadiene copolymer (SBR), and, in particular, is preferably polar group-containing SBR. The polar group-containing SBR is a polymer that is obtained through modification of SBR with a polar group such as an acid group. Examples of monomers that can be used to perform acid group modification of SBR include the acid group-containing monomers that were previously described in the "Particulate polymer A" section. The acrylic polymer is a polymer that includes a (meth)acrylic acid ester monomer unit in a proportion of 50 mass% or more, and preferably 60 mass% or more relative to all repeating units. Examples of (meth)acrylic acid ester monomers that can form a (meth)acrylic acid ester monomer unit include the same monomers as previously described in the "Particulate polymer A" section. In particular, the acrylic polymer is preferably a polymer that includes a (meth)acrylic acid ester monomer unit having a carbon number of 8 or more (particularly a 2-ethylhexyl acrylate unit having a carbon number of 8) in a proportion of not less than 50 mass% and not more than 95 mass%. The inclusion of a (meth)acrylic acid ester monomer unit having a carbon number of 8 or more enables better adhesiveness between an electrode and a separator.

Note that one type of polymer may be used individually as the particulate polymer B, or two or more types of polymers may be used in combination as the particulate polymer B.

-Glass-transition temperature of particulate polymer B-

The glass-transition temperature of the particulate polymer B is required to be 20°C or lower, is preferably 10°C or lower, and is preferably -50°C or higher, and more preferably -40°C or higher. When the glass-transition temperature of the particulate polymer B is not higher than any of the upper limits set forth above, adhesiveness of an adhesive layer can be ensured. Note that the particulate polymer B preferably has one glass-transition temperature.

-Volume-average particle diameter of particulate polymer B-

The volume-average particle diameter of the particulate polymer B is preferably 80 nm or more, and more preferably 100 nm or more, and is preferably 400 nm or less, and more preferably 200 nm or less. When the volume-average particle diameter of the particulate polymer B is not less than any of the lower limits set forth above, internal resistance of an obtained secondary battery can be further reduced. Moreover, when the volume-average particle diameter of the particulate polymer B is not more than any of the upper limits set forth above, blocking resistance of an adhesive layer can be increased. Note that the volume-average particle diameter of the particulate polymer B can be measured by a method described in the EXAMPLES section.

The production method of the particulate polymer B may be solution polymerization, suspension polymerization, emulsion polymerization, or the like, for example. Of these methods, emulsion polymerization and suspension polymerization are preferable in terms that polymerization can be carried out in water and that a water dispersion containing the particulate polymer B can suitably be used in that form as a material of the slurry composition for an adhesive layer. Moreover, in production of a polymer as the particulate polymer B, it is preferable that the reaction system contains a dispersant. In general, the particulate polymer B is substantially formed of the constituent polymer thereof but may also be accompanied by any components such as additives that are used in polymerization.

<Mixing ratio of particulate polymers A and B>

With regards to the mixing ratio of the particulate polymer A and the particulate polymer B in the slurry composition, the amount of the particulate polymer B is preferably 3 parts by mass or more, more preferably 5 parts by mass or more, and even more preferably 7 parts by mass or more relative to 100 parts by mass of the particulate polymer A, and is preferably 25 parts by mass or less, more preferably 15 parts by mass or less, and even more preferably 12 parts by mass or less relative to 100 parts by mass of the particulate polymer A. When the mixing ratio of the particulate polymers A and B is within any of the ranges set forth above, an adhesive layer can be provided with good adhesiveness, and the occurrence of blocking can be inhibited well.

<Water-soluble polymer>

The water-soluble polymer that is contained in the slurry composition for a non-aqueous secondary battery adhesive layer has a function of adjusting the viscosity of the slurry composition for a non-aqueous secondary battery adhesive layer and providing the slurry composition for a non-aqueous secondary battery adhesive layer with good coatability. It is preferable that the water-soluble polymer has adhesiveness and electrolyte solution resistance and fulfills a role in assisting adhesion between components in an adhesive layer and between battery members inside of a secondary battery.

-Type of water-soluble polymer-

The water-soluble polymer may be a natural polymer, a semi-synthetic polymer, or a synthetic polymer, for example, without any specific limitations.

[Natural polymer]

The natural polymer may be a polysaccharide or protein of plant or animal origin, a fermentation treated product of any thereof by microorganisms or the like, or a heat-treated product of any thereof, for example.
These natural polymers can be classified as plant-based natural polymers, animal-based natural polymers, microorganism-produced natural polymers, and so forth.
Examples of plant-based natural polymers include gum arabic, gum tragacanth, galactan, guar gum, carob gum, karaya gum, carrageenan, pectin, agar, quince seed (marmelo), algal colloid (phaeophyceae extract), starch (for example, starch derived from rice, corn, potato, or wheat), and glycyrrhizin. Examples of animal-based natural polymers include collagen, casein, albumin, and gelatin. Examples of microorganism-produced natural polymers include xanthan gum, dextran, succinoglucan, and pullulan.

[Semi-synthetic polymer]

The semi-synthetic polymer may be a cellulosic semi-synthetic polymer. Cellulosic semi-synthetic polymers can be categorized as non-ionic cellulosic semi-synthetic polymers, anionic cellulosic semi-synthetic polymers, and cationic cellulosic semi-synthetic polymers.
Examples of non-ionic cellulosic semi-synthetic polymers include alkyl celluloses such as methyl cellulose, methyl ethyl cellulose, ethyl cellulose, and microcrystalline cellulose; and hydroxyalkyl celluloses such as hydroxyethyl cellulose, hydroxybutyl methylcellulose, hydroxypropyl cellulose, hydroxypropyl methylcellulose, hydroxyethyl methylcellulose, hydroxypropyl methylcellulose stearoxy ether, carboxymethyl hydroxyethyl cellulose, alkyl hydroxyethyl cellulose, and nonoxynyl hydroxyethyl cellulose.
Examples of anionic cellulosic semi-synthetic polymers include substitution products obtained by substitution of the non-ionic cellulosic semi-synthetic polymers described above with various derivative groups and salts (sodium salts, ammonium salts, and the like) of these substitution products. Specific examples include sodium cellulose sulfate, methyl cellulose, methyl ethyl cellulose, ethyl cellulose, carboxymethyl cellulose (CMC), and salts thereof.
Examples of cationic cellulosic semi-synthetic polymers include low nitrogen hydroxyethyl cellulose dimethyl diallylammonium chloride (polyquaternium-4), O-[2-hydroxy-3-(trimethylammonio)propyl]hydroxyethyl cellulose chloride (polyquaternium-10), and O-[2-hydroxy-3-(lauryldimethylammonio)propyl]hydroxyethyl cellulose chloride (polyquaternium-24).

[Synthetic polymer]

The synthetic polymer may be a synthetic polymer including an acid group-containing monomer unit in a proportion of not less than 5 mass% and not more than 50 mass%, a vinyl acetate polymer such as polyvinyl alcohol, special ammonium polyacrylate (for example, ARON® A6114 (ARON is a registered trademark in Japan, other countries, or both) produced by Toagosei Co., Ltd.), an acrylic acid/sulfonic acid monomer copolymer (for example, Aqualic® GL366 (Aqualic is a registered trademark in Japan, other countries, or both) produced by Nippon Shokubai Co., Ltd.), a compound commonly known as a polyethylene glycol-type non-ionic surfactant or propylene oxide/ethylene oxide copolymer (for example, NOPTECHS® ED052 (NOPTECHS is a registered trademark in Japan, other countries, or both) produced by San Nopco Limited), or the like, for example, without any specific limitations.
Examples of acid group-containing monomers that can be used to form an acid group-containing monomer unit include the same acid group-containing monomers as previously described. One of these acid group-containing monomers may be used individually, or two or more of these acid group-containing monomers may be used in combination in a freely selected ratio.

The proportion constituted by an acid group-containing monomer such as described above in a monomer composition used to produce the synthetic polymer is preferably 5 mass% or more, and more preferably 25 mass% or more, and is preferably 50 mass% or less, and more preferably 45 mass% or less. When the proportion constituted by the acid group-containing monomer in the monomer composition used to produce the synthetic polymer is within any of the ranges set forth above, uniformity of an obtained adhesive layer can be further increased. For the same reason, the proportional content of acid group-containing monomer units in the synthetic polymer that is synthesized using the monomer composition is preferably 5 mass% or more, and more preferably 25 mass% or more when all repeating units forming the synthetic polymer are taken to be 100 mass%, and is preferably 50 mass% or less, and more preferably 45 mass% or less when all repeating units forming the synthetic polymer are taken to be 100 mass%.

The monomer composition can also contain other compounds that are copolymerizable with the acid group-containing monomer. Specific examples of such other compounds include the previously described (meth)acrylic acid ester monomers, the previously described cross-linkable monomers, amide group-containing monomers such as (meth)acrylamide, and nitrile group-containing monomers such as acrylonitrile.

Examples of additives that can be compounded in the monomer composition used to produce the synthetic polymer include known additives that can be used in polymerization reactions such as cross-linkers (ethylene glycol dimethacrylate, etc.), polymerization initiators (potassium persulfate, etc.), and polymerization accelerators (tetramethylethylenediamine, etc.). The types and amounts of additives can be freely selected in accordance with the polymerization method and so forth.

Moreover, any known solvent in which the above-described monomers can be dissolved or dispersed can be used in accordance with the polymerization method, etc. as a polymerization solvent that is compounded in the monomer composition used to produce the synthetic polymer. Of such solvents, water is preferable as the polymerization solvent. Moreover, the polymerization solvent may be an aqueous solution of a freely selected compound or a mixed solution of water and a small amount of an organic medium.

The synthetic polymer is obtained by performing radical polymerization, for example, of a monomer composition obtained by mixing the above-described monomers, cross-linker, additives, and polymerization solvent by a known method. A solution containing the synthetic polymer and the polymerization solvent that is obtained through polymerization of the monomer composition may be used in that form to produce the slurry composition for an adhesive layer or may be used to produce the slurry composition for an adhesive layer after undergoing solvent replacement, addition of optional components, or the like.

The polymerization method of the synthetic polymer may be a commonly known polymerization method such as aqueous solution polymerization, slurry polymerization, suspension polymerization, or emulsion polymerization. However, aqueous solution polymerization using water as the polymerization solvent is preferable in terms that a solvent removal operation is not required, solvent safety is high, and there are no issues related to mixing in of a surfactant. The aqueous solution polymerization is a method in which a monomer composition is adjusted to a specific concentration and sufficient purging of dissolved oxygen in the reaction system with an inert gas is performed prior to carrying out a polymerization reaction by adding a radical polymerization initiator and performing heating or light irradiation with ultraviolet light or the like as necessary.

When water is used as the polymerization solvent and the above-described monomer composition is polymerized in water to produce an aqueous solution containing the synthetic polymer, the aqueous solution is preferably adjusted to a pH of not lower than 8 and not higher than 9 after polymerization.

-Weight-average molecular weight of water-soluble polymer-

The weight-average molecular weight of the water-soluble polymer is preferably 300 or more, and more preferably 500 or more, and is preferably 3,000,000 or less, and more preferably 2,500,000 or less. In a case in which the presently disclosed slurry composition contains two or more types of water-soluble polymers, it is preferable to use water-soluble polymers having different weight-average molecular weights to one another.

The weight-average molecular weight of a comparatively high weight-average molecular weight water-soluble polymer (hereinafter, also referred to as a water-soluble polymer A) is preferably 100,000 or more, more preferably 150,000 or more, and even more preferably 200,000 or more, and is preferably 500,000 or less, more preferably 450,000 or less, and even more preferably 400,000 or less. When the weight-average molecular weight of the water-soluble polymer A is not less than any of the lower limits set forth above, uniformity of an obtained adhesive layer can be further improved. When the weight-average molecular weight of the water-soluble polymer A is not more than any of the upper limits set forth above, obtained adhesiveness can be increased.

The weight-average molecular weight of a comparatively low weight-average molecular weight water-soluble polymer (hereinafter, also referred to as a water-soluble polymer B) is preferably 300 or more, more preferably 400 or more, and even more preferably 500 or more, and is preferably 90,000 or less, and more preferably 80,000 or less.

When the weight-average molecular weight of the water-soluble polymer B is not less than any of the lower limits set forth above, uniformity of an obtained adhesive layer can be further improved. When the weight-average molecular weight of the water-soluble polymer B is not more than any of the upper limits set forth above, obtained adhesiveness can be increased.

Note that combined use of the water-soluble polymer A and the water-soluble polymer B makes it possible to further improve uniformity of an obtained adhesive layer.

-Mixing ratio of water-soluble polymer-

The mixing ratio of the water-soluble polymer in the slurry composition for a non-aqueous secondary battery adhesive layer is preferably 0.05 parts by mass or more, more preferably 0.1 parts by mass or more, and even more preferably 0.5 parts by mass or more relative to 100 parts by mass of the particulate polymer A, and is preferably 5 parts by mass or less, and more preferably 3 parts by mass or less relative to 100 parts by mass of the particulate polymer A. By setting the mixing ratio of the water-soluble polymer within any of the ranges set forth above, it is possible to increase coatability of the slurry composition, and to thereby increase uniformity of an obtained adhesive layer and also further reduce internal resistance of an obtained secondary battery. Note that in a case in which the slurry composition contains the water-soluble polymers A and B described above as the water-soluble polymer, the total amount of the water-soluble polymers A and B is preferably within any of the ranges set forth above.

<Other components>

The slurry composition for a non-aqueous secondary battery adhesive layer may contain any other components besides the particulate polymers A and B and the water-soluble polymer described above. Note that compounds corresponding to the water-soluble polymer described above are excluded from these other components. Examples of such other components include preservatives and defoamers. One of these other components may be used individually, or two or more of these other components may be used in combination. Through optional compounding of other components such as a preservative and a defoamer, it is possible to impart desired attributes to the slurry composition for an adhesive layer.

In particular, an isothiazoline compound such as Navisite P40 or ACTICIDE MBS, or the like, can suitably be compounded as a preservative. Moreover, DF6351 produced by Seiko PMC Corporation or the like can suitably be compounded as a defoamer. The amounts of these components can be adjusted as appropriate depending on the intended use. For example, the total amount of these additives is preferably within a range of not less than 1,000 ppm and not more than 3,000 ppm relative to 100 parts by mass of the particulate polymer A.

<Dispersion medium>

Water can be used as the dispersion medium. Note that the dispersion medium is not specifically limited so long as the particulate polymers A and B can be dispersed therein and the water-soluble polymer can be at least partially dissolved therein and may be a mixed solvent of water and an organic solvent. Water is preferable as the dispersion medium from a viewpoint of coatability.

<Production method of slurry composition for non-aqueous secondary battery adhesive layer>

A production method of the slurry composition for an adhesive layer includes a step of mixing the particulate polymers A and B, the water-soluble polymer, and the dispersion medium with other components that are used as necessary. Although no specific limitations are placed on the mixing method, the mixing is normally carried out using a disperser as a mixer to efficiently disperse the components.

The disperser is preferably a device that can uniformly disperse and mix the above-described components. Examples of such devices include a ball mill, a sand mill, a pigment disperser, a grinding machine, an ultrasonic disperser, a homogenizer, and a planetary mixer. Moreover, a high dispersion device such as a bead mill, a roll mill, or a FILMIX may be used from a viewpoint that high shear force can be imparted during dispersing.

<pH of slurry composition for non-aqueous secondary battery adhesive layer>

The pH of the slurry composition for an adhesive layer is preferably 7 or higher, and more preferably 8 or higher, and is preferably 9 or lower. When the pH of the slurry composition for an adhesive layer is within any of the ranges set forth above, this results in even better uniformity and enables further reduction of internal resistance of an obtained non-aqueous secondary battery.

<Solid content concentration of slurry composition for non-aqueous secondary battery adhesive layer>

The solid content concentration of the slurry composition for an adhesive layer is required to be not less than 1 mass% and not more than 25 mass%, and is preferably 20 mass% or less, more preferably 12 mass% or less, even more preferably 8 mass% or less, and particularly preferably 5 mass% or less. When the solid content concentration is within any of the ranges set forth above, it is possible to uniformly produce an adhesive layer having a thin thickness and a low mass per unit area. As a result, internal resistance of an obtained secondary battery can be reduced, and fast charging performance of the secondary battery can be increased.

(Adhesive layer for non-aqueous secondary battery and member for non-aqueous secondary battery including same)

The slurry composition for a non-aqueous secondary battery adhesive layer set forth above can be used to form an adhesive layer on an appropriate substrate. Specifically, an adhesive layer for a non-aqueous secondary battery can be formed by drying the slurry composition for a non-aqueous secondary battery adhesive layer on an appropriate substrate. In other words, the presently disclosed adhesive layer for a non-aqueous secondary battery is formed of a dried product of the slurry composition for a non-aqueous secondary battery adhesive layer set forth above, normally contains the particulate polymers A and B and the water-soluble polymer described above, and optionally contains the other components described above. Note that in a case in which any one of the particulate polymers A and B and the water-soluble polymer described above includes a cross-linkable monomer unit, this cross-linkable monomer unit may be cross-linked during drying of the slurry composition or during heat treatment that is optionally performed after drying (i.e., the adhesive layer for a non-aqueous secondary battery may contain a cross-linked product of the particulate polymer A, the particulate polymer B, and/or the water-soluble polymer described above). Note that the preferred ratio of components contained in the adhesive layer for a non-aqueous secondary battery is the same as the preferred ratio of these components in the slurry composition for a non-aqueous secondary battery adhesive layer.

Moreover, the particulate polymers A and B that are present as particles in the slurry composition for a non-aqueous secondary battery adhesive layer may maintain their particulate form in the adhesive layer or may change form. Moreover, in a case in which a particulate polymer A having a core-shell structure is compounded in the slurry composition for an adhesive layer, it is preferable that the core-shell structure itself is maintained even in a situation in which the form of the overall particulate polymer A changes from its original particulate form.

The presently disclosed adhesive layer for a non-aqueous secondary battery has excellent uniformity and can reduce internal resistance of an obtained non-aqueous secondary battery.

Moreover, a member for a non-aqueous secondary battery that includes the presently disclosed adhesive layer for a non-aqueous secondary battery can reduce internal resistance of an obtained non-aqueous secondary battery.

<Substrate>

No specific limitations are placed on the substrate on which the adhesive layer is formed. For example, a separator substrate can be used as the substrate in a situation in which the adhesive layer is used as a member that constitutes part of a separator and an electrode substrate obtained by forming an electrode mixed material layer on a current collector can be used as the substrate in a situation in which the adhesive layer is used as a member that constitutes part of an electrode. No specific limitations are placed on the use of the adhesive layer formed on the substrate. For example, the adhesive layer may be formed on a separator substrate or the like and then used in this form as a battery member such as a separator. Alternatively, the adhesive layer may be formed on an electrode substrate and then used as an electrode. Further alternatively, the adhesive layer may be formed on a releasable substrate, may be peeled from the substrate, and may then be affixed to another substrate for use as a battery member.

However, it is preferable that a separator substrate or an electrode substrate is used as the substrate from a viewpoint of raising battery member production efficiency since a step of peeling a releasable substrate from the adhesive layer can be omitted.

[Separator substrate]

The separator substrate is not specifically limited and may be a separator substrate having an optional heat-resistant layer (for example, a layer containing a heat-resistant filler such as inorganic particles) disposed on the surface of an organic separator material that is a microporous membrane formed of a polyolefinic resin such as polyethylene, polypropylene, polybutene, or polyvinyl chloride, for example. In other words, the member for a non-aqueous secondary battery may have a structure in which the adhesive layer for a non-aqueous secondary battery is disposed directly adjacently to at least one surface of the organic separator material or in which the adhesive layer for a non-aqueous secondary battery is disposed adjacently to the surface of a heat-resistant layer included on at least one surface of the organic separator material.

[Electrode substrate]

The electrode substrate (positive electrode substrate or negative electrode substrate) on which the adhesive layer may be formed is not specifically limited and may be an electrode substrate having an electrode mixed material layer formed on a current collector.

The current collector, components in the electrode mixed material layer (for example, an electrode active material (positive electrode active material or negative electrode active material) and a binder for an electrode mixed material layer (binder for a positive electrode mixed material layer or binder for a negative electrode mixed material layer)), and the method by which the electrode mixed material layer is formed on the current collector can be known examples thereof such as any of those described in JP2013-145763A, for example.

Note that the electrode substrate may include any layer having an expected function other than the adhesive layer in part thereof.

[Releasable substrate]

The releasable substrate on which the adhesive layer may be formed is not specifically limited and may be any known releasable substrate.

<Mass per unit area of adhesive layer>

The mass per unit area of the adhesive layer is preferably 0.2 $g/m^2$ or less, more preferably 0.15 $g/m^2$ or less, and even more preferably 0.11 $g/m^2$ or less. When the mass per unit area of the adhesive layer is not more than any of the upper limits set forth above, internal resistance of an obtained secondary battery can be further reduced, and fast charging performance of the secondary battery can be increased. Note that although no specific limitations are placed on the lower limit for the mass per unit area of the adhesive layer, the mass per unit area can normally be 0.05 $g/m^2$ or more.

(Production method of adhesive layer for non-aqueous secondary battery)

Examples of methods by which the adhesive layer may be formed on a substrate, such as the above-described separator substrate or electrode substrate, include:

(1) a method in which the slurry composition for an adhesive layer is applied onto the surface of the separator substrate or the electrode substrate (surface at the electrode mixed material layer-side in the case of the electrode substrate; same applies below) by gravure coating or slot-die coating and is then dried; and
(2) a method in which the slurry composition for an adhesive layer is applied onto a releasable substrate by gravure coating or slot-die coating and is dried to produce an adhesive layer that is then transferred onto the surface of the separator substrate or the electrode substrate.

Of these methods, method (1) is particularly preferable because it is possible to reduce the thickness of the adhesive layer while also increasing uniformity of the adhesive layer. In more detail, method (1) includes a step of applying the slurry composition for an adhesive layer onto the separator substrate or the electrode substrate by gravure coating or slot-die coating (application step) and a step of drying the slurry composition for an adhesive layer that has been applied onto the separator substrate or the electrode substrate to form an adhesive layer (drying step).

The slurry composition for an adhesive layer on the substrate can be dried by any commonly known method in the drying step without any specific limitations. For example, the drying may be carried out through drying by warm, hot, or low-humidity air; drying in a vacuum; or drying by irradiation with infrared light, electron beams, or the like. Although no specific limitations are placed on the drying conditions, the drying temperature is preferably 30°C to 80°C and the drying time is preferably 30 seconds to 10 minutes.

The thickness of the adhesive layer that is formed on the substrate is preferably 0.1 $\mu$m or more, more preferably 0.3 $\mu$m or more, and even more preferably 0.5 $\mu$m or more, and is preferably 3.0 $\mu$m or less, more preferably 1.5 $\mu$m or less, and even more preferably 1.0 $\mu$m or less. Strength of the adhesive layer can be sufficiently ensured through the thickness of the adhesive layer being not less than the lower limit of any of the ranges set forth above, whereas internal resistance of a secondary battery can be further reduced through the thickness of the adhesive layer being not more than the upper limit of any of the ranges set forth above.

(Non-aqueous secondary battery)

The presently disclosed non-aqueous secondary battery is a non-aqueous secondary battery that includes the presently disclosed member for a non-aqueous secondary battery set forth above. More specifically, the presently disclosed non-aqueous secondary battery is a non-aqueous secondary battery in which at least one of a positive electrode, a negative electrode, and a separator is the presently disclosed member for a non-aqueous secondary battery.

The presently disclosed non-aqueous secondary battery has low internal resistance as a result of including the presently disclosed member for a non-aqueous secondary battery. Consequently, the presently disclosed non-aqueous secondary battery has excellent fast charging performance.

<Positive electrode and negative electrode>

As described above, at least one of a positive electrode, a negative electrode, and a separator in the presently disclosed secondary battery is the presently disclosed member for a non-aqueous secondary battery that includes the presently disclosed adhesive layer. In other words, an electrode having the adhesive layer provided on an electrode substrate in which an electrode mixed material layer is formed on a current collector can be used. Examples of electrode substrates and separator substrates that can be used include the same examples as in the "Adhesive layer for non-aqueous secondary battery" section.

Moreover, in the case of a positive electrode or negative electrode that does not include an adhesive layer, it is possible to use an electrode formed of an electrode substrate such as previously described without any specific limitations.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), and methyl ethyl carbonate (MEC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of non-aqueous secondary battery>

The non-aqueous secondary battery can be produced by, for example, stacking the positive electrode and the negative electrode with the separator in-between, placing the resultant positive electrode-separator-negative electrode laminate in a battery container as produced or after rolling, folding, or the like as necessary, injecting the electrolyte solution into the battery container, and sealing the battery container. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

Measurements and evaluations of various attributes in the examples and comparative examples were performed according to the following methods.

<Glass-transition temperature>

The glass-transition temperature of each particulate polymer A or B produced in the examples and comparative examples was measured by using a differential scanning calorimeter (EXSTAR DSC6220 produced by SII NanoTechnology Inc.) to measure a DSC curve in accordance with JIS K6240. Specifically, 10 mg of a dried measurement sample was weighed into an aluminum pan, and then a DSC curve was measured in a measurement temperature range of -100°C to 200°C with a heating rate of 20°C/min and using an empty aluminum pan as a reference. In this heating process, the temperature of a heat absorption peak of a derivative signal (DDSC) was determined, and this temperature was taken to be the glass-transition temperature of the particulate polymer A or B. Note that two glass-transition temperatures were detected for every particulate polymer A or particulate polymer used in place thereof in the examples and comparative examples. The lower of these temperatures was adopted as the glass-transition temperature of the particulate polymer A.

<Volume-average particle diameter>

The volume-average particle diameter of each particulate polymer A or B produced in the examples and comparative examples was measured by laser diffraction. Specifically, a water dispersion (adjusted to a solid content concentration of 0.1 mass%) containing the produced particulate polymer A or B was used as a sample. In a particle diameter distribution (by volume) measured using a laser diffraction particle size analyzer (LS-13320 produced by Beckman Coulter, Inc.), the particle diameter D50 at which cumulative volume calculated from a small diameter end of the distribution reached 50% was taken to be the volume-average particle diameter.

<Weight-average molecular weight of water-soluble polymer>

Each aqueous solution containing a water-soluble polymer used in the examples and comparative examples was diluted so as to adjust the concentration thereof to 0.5%. Next, the aqueous solution was further diluted to 0.025% with the eluent indicated below to prepare a sample. This sample was analyzed by gel permeation chromatography under the following conditions, a molecular weight distribution curve was prepared, and the weight-average molecular weight of the water-soluble polymer was determined.

Apparatus: Gel permeation chromatograph GPC (Agilent 1260 Infinity II HPLC)
Detector: Differential refractive index detector RI (Agilent 1260 Infinity II)
Column: TSKgel GMPWXL $\times$ 2 columns ($\varnothing$7.8 mm $\times$ 30 cm; produced by Tosoh Corporation)
Solvent: 0.1 M Tris buffer solution (0.1 M potassium chloride added) in case of anionic polymer
Flow rate: 0.7 mL/min
Column temperature: 40°C
Injection volume: 0.2 mL
Standard sample: Monodisperse polyethylene oxide (PEO) and polyethylene glycol (PEG) produced by Tosoh Corporation and Sigma-Aldrich

<Mass per unit area of adhesive layer>

Ten test specimens of 10 cm in width and 10 cm in length were cut out from a substrate including an adhesive layer that was obtained in each example or comparative example. An average value $W_1$ (g) of the masses of the cut-out test specimens was measured. Moreover, the thickness of each test specimen was measured at the four corners and center thereof (five locations in total), and an average value of the measured thicknesses was taken to be the thickness $T_1$ ($\mu$m) of the test specimen. In addition, a substrate used in each example or comparative example was cut out in the same manner prior to coating with an adhesive layer, and the mass $W_0$ (g) and thickness $T_0$ ($\mu$m) thereof were measured by the same measurement methods. The density $\rho$ of the adhesive layer was calculated from the obtained values according to the following formula.

$$\rho = (W_1 - W_0)/(T_1 - T_0) \times 100$$

<Coatability of slurry composition for adhesive layer (presence of streaks and unevenness)>

An adhesive layer obtained in each example or comparative example was visually observed while shining light against a substrate side coated with the adhesive layer. In a case in which there are "streaks" or "unevenness" of the adhesive layer, there is a visually discernable difference in the amount of light that is transmitted. The term "streaks" as used in the present specification refers to surface irregularities that arise under the influence of an applicator used to apply a slurry composition for an adhesive layer, for example. Moreover, the term "unevenness" refers to irregular layer thickness of an applied adhesive layer. Based on a distribution pattern for the amount of transmitted light, it is possible to visually discern whether "streaks" and "unevenness" are present in the adhesive layer that is an observation subject. A slurry composition for an adhesive layer that forms an adhesive layer capable of transmitting light uniformly has good coatability, whereas a slurry composition for an adhesive layer that forms an adhesive layer in which "streaks" or "unevenness" arise has poor coatability. Therefore, the coatability of a slurry composition for an adhesive layer was evaluated in accordance with the following standard.

Good: Formed adhesive layer transmits light uniformly
Slight streaks: Formed adhesive layer has line-shaped regions in which the amount of transmitted light fairly clearly varies
Streaks: Formed adhesive layer has line-shaped regions in which the amount of transmitted light clearly varies
Unevenness: Formed adhesive layer has regions in which the amount of transmitted light varies irregularly without a clear boundary

<Evaluation of low mass per unit area properties>

The mass per unit area of an adhesive layer was calculated from the difference between "weight of substrate + adhesive layer after coating" and "weight of uncoated substrate". Low mass per unit area properties were evaluated by the following standard. A smaller difference between "weight of substrate + adhesive layer after coating" and "weight of uncoated substrate" indicates better low mass per unit area properties.

SA: Difference between "weight of substrate + adhesive layer after coating" and "weight of uncoated substrate" of 0.1 $(g/m^2)$ or less
A: Difference between "weight of substrate + adhesive layer after coating" and "weight of uncoated substrate" of more than 0.1 $(g/m^2)$ and not more than 0.15 $(g/m^2)$
B: Difference between "weight of substrate + adhesive layer after coating" and "weight of uncoated substrate" of more than 0.15 $(g/m^2)$ and not more than 0.25 $(g/m^2)$
C: Difference between "weight of substrate + adhesive layer after coating" and "weight of uncoated substrate" of more than 0.25 $(g/m^2)$

<Evaluation of uniformity>

The uniformity of an adhesive layer was evaluated in accordance with the following standard by observing the adhesive layer at $\times 2,000$ magnification using an SEM (FE-SEM (JSM-7800F Prime)) and by visually checking an abundance ratio (sparseness or denseness) of primary particles (particulate polymer A present individually). A higher abundance ratio of primary particles indicates better uniformity.

SA: Primary particle abundance ratio of 80% or more
A: Primary particle abundance ratio of not less than 60% and less than 80%
B: Primary particle abundance ratio of not less than 40% and less than 60%
C: Primary particle abundance ratio of less than 40%

<Swelling properties of secondary battery>

A secondary battery produced in each example or comparative example was left at rest in a 25°C environment for 24 hours after injection of electrolyte solution. The thickness of the battery at this time was measured using calipers. Thereafter, the secondary battery was subjected to a charge/discharge operation of charging to 4.2 V by a constant-voltage constant-current (CC-CV) method with a charge rate of 1C (cut-off condition: 0.02C) and discharging to 3.0 V by a constant-current (CC) method with a discharge rate of 1C at 25°C. The same charge/discharge operation was further repeated in a 45°C environment, and the thickness of the battery after 300 cycles was measured using calipers. The proportional increase of the thickness of the battery after cycling relative to before cycling was evaluated as a swelling property of the battery. A smaller proportional increase of the thickness of the battery after cycling relative to before cycling indicates better swelling properties.

A: Proportional increase of thickness of battery after cycling relative to before cycling of less than 1%
B: Proportional increase of thickness of battery after cycling relative to before cycling of not less than 1% and less than 5%
C: Proportional increase of thickness of battery after cycling relative to before cycling of 5% or more

<Internal resistance of secondary battery>

A secondary battery produced in each example or comparative example was left at rest at a temperature of 25°C for 5 hours after injection of electrolyte solution. Next, the secondary battery was charged to a cell voltage of 3.65 V by a 0.2C constant-current method at a temperature of 25°C and was then subjected to 12 hours of aging at a temperature of 60°C. The secondary battery was subsequently discharged to a cell voltage of 3.00 V by a 0.2C constant-current method at a temperature of 25°C. Thereafter, CC-CV charging was performed with a 0.2C constant current (upper limit cell voltage: 4.35 V) and CC discharging was performed to a cell voltage of 3.00 V with a 0.2C constant current. This charging and discharging at 0.2C was repeated three times.

Next, the secondary battery was subjected to 0.2C constant-current charging and discharging between cell voltages of 4.2 V and 3.00 V in an environment having a temperature of 25°C, and the discharge capacity at this time was defined as C0. Thereafter, the secondary battery was CC-CV charged with a 0.2C constant current in the same manner, was subsequently discharged to 3.0 V with a 0.5C constant current in an environment having a temperature of -10°C, and the discharge capacity at this time was defined as C1. A capacity maintenance rate expressed by $\Delta C = (C1/C0) \times 100(\%)$ was determined as a rate characteristic and was evaluated by the following standard. A larger value for this capacity maintenance rate $\Delta C$ indicates lower internal resistance and higher discharge capacity at high current in a low temperature environment.

A: Capacity maintenance rate $\Delta C$ of 70% or more (resistance: low)
B: Capacity maintenance rate $\Delta C$ of not less than 55% and less than 70% (resistance: medium)
C: Capacity maintenance rate $\Delta C$ of less than 55% (resistance: high)

<Adhesiveness>

A separator (thickness: 12 μm) made of a single layer of polyethylene that had been produced by a wet method was prepared as a separator substrate. A slurry composition produced in each example or comparative example was applied onto one surface of this separator substrate, and the slurry composition on the separator substrate was dried at 50°C for 10 minutes to form a functional layer (coating mass per unit area: 0.2 g/m$^2$). The separator including the functional layer at one surface was used as a separator for evaluation.

In addition, a negative electrode was produced in the same way as subsequently described in Example 1 and was used as a negative electrode for evaluation.

The obtained negative electrode for evaluation and separator for evaluation were each cut out as a rectangular shape of 10 mm × 100 mm. The negative electrode mixed material layer of the negative electrode was arranged along the functional layer surface of the separator to obtain a test specimen, and this test specimen was placed inside laminate packing together with approximately 400 μL of electrolyte solution (solvent: ethylene carbonate (EC)/diethyl carbonate (DEC)/vinylene carbonate (VC) (volume ratio) = 68.5/30/1.5; electrolyte: LiPF$_6$ of 1 M in concentration). Once 12 hours had passed, the test specimen, together with the laminate packing, was pressed at 80°C with a pressure of 1.0 MPa for 10 minutes.

The test specimen was then taken out, and electrolyte solution attached to the surface of the test specimen was wiped off. Next, the test specimen was placed with the surface at the current collector-side of the negative electrode facing downward, and cellophane tape was affixed to the surface at the current collector-side of the negative electrode. Tape prescribed by JIS Z1522 was used as the cellophane tape. The cellophane tape was fixed to a horizontal test stage in advance. One end of the separator was pulled vertically upward at a pulling speed of 50 mm/min, and the stress when the separator was peeled off was measured. This measurement was made three times. An average value of the stress was determined as the peel strength and was evaluated by the following standard. A large peel strength indicates that the functional layer has excellent adhesiveness after immersion in electrolyte solution and that a separator and an electrode (negative electrode) can be strongly adhered via the functional layer in electrolyte solution.

A: Peel strength of 6.0 N/m or more
B: Peel strength of not less than 2.0 N/m and less than 6.0 N/m
C: Peel strength of less than 2.0 N/m

<Electrolyte solution injectability>

A lithium ion secondary battery produced in each example or comparative example was injected with electrolyte solution (solvent: ethylene carbonate (EC)/diethyl carbonate (DEC)/vinylene carbonate (VC) (volume ratio) = 68.5/30/1.5; electrolyte: $LiPF_6$ of 1 M in concentration). The inside of the lithium ion secondary battery was depressurized to -100 kPa and was held in this state for 1 minute. Heat sealing was subsequently performed. After 10 minutes, an electrode (positive electrode) was dismantled and the impregnation state of electrolyte solution in the electrode was visually confirmed. An evaluation was made by the following standard. A larger portion impregnated with electrolyte solution in the electrode indicates higher electrolyte solution injectability.

A: Entire surface of electrode impregnated with electrolyte solution
B: Portion remaining unimpregnated with electrolyte solution in electrode is less than 1 $cm^2$ (excluding case in which entire surface is impregnated)
C: Portion remaining unimpregnated with electrolyte solution in electrode is 1 $cm^2$ or more

<Cycle durability>

A lithium ion secondary battery produced in each example or comparative example was left at rest in a 25°C environment for 24 hours after injection of electrolyte solution. Thereafter, the lithium ion secondary battery was subjected to a charge/discharge operation of charging to 4.2 V by a constant-voltage constant-current (CC-CV) method with a charge rate of 1C (cut-off condition: 0.02C) and discharging to 3.0 V by a constant-current (CC) method with a discharge rate of 1C at 25°C, and the initial capacity C2 was measured.

The lithium ion secondary battery was also repeatedly subjected to the same charge/discharge operation in a 45°C environment, and the capacity C3 after 300 cycles was measured. A capacity maintenance rate ΔC was calculated (ΔC = (C3/C2) × 100(%)) and was evaluated by the following standard. A higher value for this capacity maintenance rate indicates less reduction of discharge capacity and better cycle characteristics.

A: Capacity maintenance rate ΔC of 85% or more
B: Capacity maintenance rate ΔC of not less than 75% and less than 85%
C: Capacity maintenance rate ΔC of less than 75%

(Example 1)

<Production of particulate polymer A>

A polymer (1-1) having a core-shell structure was produced as a particulate polymer A. First, a 5 MPa pressure-resistant vessel equipped with a stirrer was charged with 45 parts of methyl methacrylate monomer and 21.83 parts of butyl acrylate as (meth)acrylic acid ester monomers, 2.8 parts of methacrylic acid monomer as an acid group-containing monomer, and 0.07 parts of allyl methacrylate as a cross-linkable monomer for core portion formation. In addition, 1 part of sodium dodecylbenzenesulfonate as an emulsifier, 150 parts of deionized water, and 0.5 parts of potassium persulfate as a polymerization initiator were added, were thoroughly stirred therewith, and then the inside of the vessel was heated to 60°C to initiate polymerization. At the point at which the polymerization conversion rate reached 96%, 30 parts of styrene and 0.3 parts of methacrylic acid monomer were continuously added into the vessel for shell portion formation, the inside of the vessel was heated to 70°C, and polymerization was continued. Cooling was performed to quench the reaction at the point at which the polymerization conversion rate reached 96%. This yielded a water dispersion containing a polymer (1-1) as a particulate polymer A. Measurement of glass-transition temperature and volume-average particle diameter were performed according to the previously described methods for the polymer (1-1) obtained as a particulate polymer A. The results are shown in Table 1-1.

<Production of particulate polymer B>

A 5 MPa pressure-resistant vessel equipped with a stirrer was charged with 32.5 parts of 1,3-butadiene, 65 parts of styrene, 1 part of methacrylic acid monomer as an acid group-containing monomer, 1 part of 2-hydroxyethyl acrylate, 0.5 parts of allyl methacrylate as a (meth)acrylic acid ester monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. Cooling was performed to quench the reaction at the point at which the polymerization conversion rate reached 96% to yield a mixture containing a polymer (2-1) as a particulate polymer B. The mixture containing the polymer (2-1) was adjusted to pH 8 through addition of 5% sodium hydroxide aqueous solution. Thereafter, the mixture was subjected to thermal-vacuum distillation so as to remove unreacted monomer from the mixture and was then cooled to 30°C or lower to yield a water dispersion containing the desired polymer (2-1). Measurement of glass-transition temperature and volume-average particle diameter were performed according to the previously described methods for the polymer (2-1) obtained as a particulate polymer B. The results are shown in Table 1-1.

<Production of water-soluble polymer A>

A synthetic water-soluble polymer 1 (synthetic WP1) was produced as a water-soluble polymer A. A 5 MPa pressure-resistant vessel equipped with a stirrer was charged with 34 parts of methacrylic acid as an acid group-containing monomer, 65 parts of ethyl acrylate as a (meth)acrylic acid ester monomer, 1.0 parts of ethylene glycol dimethacrylate as a cross-linkable monomer, 1.0 parts of ammonium polyoxyalkylene alkenyl ether sulfate, 150 parts of deionized water, and 0.5 parts of potassium persulfate as a polymerization initiator. These materials were thoroughly stirred, and then the inside of the vessel was heated to 60°C to initiate polymerization. Cooling was performed to quench the reaction at the point at which the polymerization conversion rate reached 96% to yield a water dispersion containing a synthetic water-soluble polymer 1 (synthetic WP1) as a water-soluble polymer A.
Next, a vessel that included a stirrer and had been charged with deionized water was further charged with the water dispersion containing the synthetic WP1 and 5 mass% sodium hydroxide aqueous solution in a formulation adjusted such that the resultant solution had a pH of 8 and a synthetic WP1 concentration of 1 mass%. These materials were thoroughly stirred to dissolve the synthetic WP1. In this manner, a water-soluble polymer A aqueous solution was produced.

<Production of slurry composition for non-aqueous secondary battery adhesive layer>

A vessel equipped with a stirrer was charged with 100 parts by mass (in terms of solid content) of the particulate polymer A, 10 parts by mass (in terms of solid content) of the particulate polymer B, and 2 parts by mass (in terms of solid content) of the water-soluble polymer A aqueous solution. These materials were mixed, were subjected to addition of 2,000 ppm of a preservative (Navisite P40) and 150 ppm of a defoamer (DF6351 produced by Seiko PMC Corporation), and were diluted with deionized water to yield a slurry composition for an adhesive layer having a solid content concentration of 1 mass%.

<Formation of adhesive layer for non-aqueous secondary battery>

The slurry composition for an adhesive layer obtained as described above was applied onto a separator substrate (made of polypropylene; Celgard 2500) using a gravure coater (μCoater produced by Yasui Seiki Inc.) and was dried at 50°C for 3 minutes. This operation was performed with respect to both surfaces of the separator substrate to obtain a separator including an adhesive layer having a thickness of 1 μm at each surface. The mass per unit area of the adhesive layer was measured as previously described for the obtained separator including the adhesive layer. The result is shown in Table 1-2.

<Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred, and then the inside of the vessel was heated to 50°C to initiate polymerization. Cooling was performed to quench the reaction at the point at which the polymerization conversion rate reached 96% to yield a mixture containing a particulate binder (SBR). The mixture containing the particulate binder was adjusted to pH 8 through addition of 5 mass% sodium hydroxide aqueous solution, was subsequently subjected to thermal-vacuum distillation so as to remove unreacted monomer, and was then cooled to 30°C or lower to yield a water dispersion containing the particulate binder.
After adjusting 100 parts of artificial graphite (average particle diameter: 15.6 μm) and 1 part in terms of solid content of a 2% aqueous solution of carboxymethyl cellulose (MAC350HC produced by Nippon Paper Industries Co., Ltd.) as a thickener to a solid content concentration of 68 mass% with deionized water, these materials were mixed at 25°C for 60 minutes. The solid content concentration was further adjusted to 62 mass% with deionized water, and then a further 15 minutes of mixing was performed at 25°C. The particulate binder described above, in an amount of 1.5 parts in terms of solid content, was added to the resultant mixture, deionized water was further added to adjust the final solid content concentration to 52 mass%, and a further 10 minutes of mixing was performed. The resultant mixture was subjected to defoaming under reduced pressure to yield a slurry composition for a negative electrode having good fluidity.

The slurry composition for a negative electrode that was obtained as described above was applied onto copper foil of 20 $\mu$m in thickness serving as a current collector by a comma coater such as to have a thickness after drying of approximately 150 $\mu$m. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode (single-sided negative electrode) having a negative electrode active material layer thickness of 80 $\mu$m.

<Production of positive electrode>

A slurry composition for a positive electrode was produced by mixing 100 parts of $LiCoO_2$ having a volume-average particle diameter of 12 $\mu$m as a positive electrode active material, 2 parts of acetylene black (HS-100 produced by Denka Company Limited) as a conductive material, 2 parts (in terms of solid content) of PVDF (#7208 produced by Kureha Corporation) as a binder, and N-methyl-2-pyrrolidone (NMP), adjusting the total solid content concentration to 70 mass%, and mixing these materials using a planetary mixer.

The slurry composition for a positive electrode obtained as described above was applied onto aluminum foil of 20 $\mu$m in thickness serving as a current collector by a comma coater such as to have a thickness after drying of approximately 150 $\mu$m. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode (single-sided positive electrode) having a positive electrode active material layer thickness of 80 $\mu$m.

<Production of lithium ion secondary battery>

The post-pressing positive electrode obtained as described above was cut out as a 4 cm square. Moreover, the separator including an adhesive layer for a non-aqueous secondary battery that was obtained as described above was cut out as a 5 cm square. The square piece of the separator was arranged on a surface at the positive electrode mixed material layer-side of the cut out square piece of the positive electrode. In addition, the post-pressing negative electrode produced as described above was cut out as a 4.2 cm square, and this square piece was arranged on the square piece of the separator such that a surface at the negative electrode mixed material layer-side thereof faced toward the square piece of the separator. Next, the resultant laminate was pressed at 0.5 MPa and a temperature of 60°C to cause adhesion.

Next, the adhered laminate was enclosed in an aluminum packing case serving as a battery case, and electrolyte solution (solvent: ethylene carbonate (EC)/diethyl carbonate (DEC)/vinylene carbonate (VC) (volume ratio) = 68.5/30/1.5; electrolyte: $LiPF_6$ of 1 M in concentration) was injected such that no air remained. Next, an opening of the aluminum packing case was heat sealed at 150°C to tightly close the aluminum packing case and thereby produce a 40 mAh stacked lithium ion secondary battery.

Various evaluations were performed as previously described for the stacked lithium ion secondary battery. The results are shown in Table 1-2.

(Examples 2 to 4)

Operations, measurements, and evaluations were performed in the same way as in Example 1 with the exception that the solid content concentration was changed as shown in Table 1-1 in production of the slurry composition for an adhesive layer. The results are shown in Tables 1-1 and 1-2.

(Example 5)

Operations, measurements, and evaluations were performed in the same way as in Example 1 with the exception that the chemical composition of the particulate polymer A was changed as shown in Table 1-1 so as to produce a polymer (1-2). The results are shown in Tables 1-1 and 1-2.

<Production of polymer (1-2)>

A polymer (1-2) having a core-shell structure was produced as a particulate polymer A. First, a 5 MPa pressure-resistant vessel equipped with a stirrer was charged with 35 parts of 2-ethylhexyl acrylate as a (meth)acrylic acid ester monomer, 31.1 parts of styrene as an aromatic vinyl monomer, 2.8 parts of methacrylic acid monomer as an acid group-containing monomer, and 0.8 parts of ethylene glycol dimethacrylate as a cross-linkable monomer for core portion formation. In addition, 1 part of sodium dodecylbenzenesulfonate as an emulsifier, 150 parts of deionized water, and 0.5 parts of potassium persulfate as a polymerization initiator were added, were thoroughly stirred therewith, and then the inside of the vessel was heated to 60°C to initiate polymerization. At the point at which the polymerization conversion rate reached 96%, 30 parts of styrene and 0.3 parts of methacrylic acid monomer were continuously added into the vessel for shell portion formation, the inside of the vessel was heated to 70°C, and polymerization was continued. Cooling was performed to quench the reaction at the point at which the polymerization conversion rate reached 96%. This yielded a water dispersion containing a polymer (1-2) as a particulate polymer A.

(Examples 6 and 7)

Operations, measurements, and evaluations were performed in the same way as in Example 1 with the exception that the chemical composition of the particulate polymer A was changed as shown in Table 1-1 so as to produce a polymer (1-3) or (1-4). The results are shown in Tables 1-1 and 1-2. Note that conditions in production of the polymers (1-3) and (1-4) were the same as in Example 5.

(Example 8)

Operations, measurements, and evaluations were performed in the same way as in Example 1 with the exception that the polymer (1-2) produced in Example 5 was used and that the pH of the slurry composition for an adhesive layer was changed to 7. The results are shown in Tables 1-1 and 1-2.

(Example 9)

Operations, measurements, and evaluations were performed in the same way as in Example 1 with the exception that the chemical composition of the particulate polymer B was changed as shown in Table 1-1 so as to produce a polymer (2-2) as described below. The results are shown in Tables 1-1 and 1-2.

<Production of polymer (2-2)>

A reactor including a stirrer was supplied with 90 parts of deionized water, 0.05 parts of sodium dodecylbenzenesulfonate (NEOPELEX G-15 produced by Kao Corporation) as an emulsifier, and 0.23 parts of ammonium persulfate. The gas phase was purged with nitrogen gas, and the temperature was raised to 70°C.
Meanwhile, a monomer composition was obtained in a separate vessel by mixing 50 parts of deionized water, 0.1 parts of sodium dodecylbenzenesulfonate as an emulsifier, 2 parts of methacrylic acid (MAA) as an acid group-containing monomer, 2.5 parts of acrylonitrile (AN) as a nitrile group-containing monomer, and, as other monomer, 95 parts of n-butyl acrylate (BA) as a (meth)acrylic acid ester monomer and 0.5 parts of allyl methacrylate (AMA) as a cross-linkable monomer. The monomer composition was continuously added into the reactor over 4 hours to perform polymerization. The reaction was carried out at 80°C during the addition. Once the addition was complete, a further 3 hours of stirring was performed at 80°C, and then the reaction was ended to yield a water dispersion containing a polymer (2-2) as a particulate polymer B.

(Example 10)

Operations, measurements, and evaluations were performed in the same way as in Example 1 with the exception that the chemical composition of the particulate polymer B was changed as shown in Table 1-1 so as to produce a polymer (2-3) as described below. The results are shown in Tables 1-1 and 1-2.

<Production of polymer (2-3)>

A reactor including a stirrer was supplied with 90 parts of deionized water, 0.05 parts of sodium dodecylbenzenesulfonate (NEOPELEX G-15 produced by Kao Corporation) as an emulsifier, and 0.23 parts of ammonium persulfate. The gas phase was purged with nitrogen gas, and the temperature was raised to 70°C.

Meanwhile, a monomer composition was obtained in a separate vessel by mixing 50 parts of deionized water, 0.1 parts of sodium dodecylbenzenesulfonate as an emulsifier, 3 parts of methacrylic acid (MAA) as an acidic group-containing monomer, 25 parts of styrene, 71.5 parts of 2-ethylhexyl acrylate (2EHA) as a (meth)acrylic acid ester monomer, and 0.5 parts of allyl methacrylate (AMA) as a cross-linkable monomer. The monomer composition was continuously added into the reactor over 4 hours to perform polymerization. The reaction was carried out at 80°C during the addition. Once the addition was complete, a further 3 hours of stirring was performed at 80°C, and then the reaction was ended to yield a water dispersion containing a polymer (2-3) as a particulate polymer B.

(Example 11)

Operations, measurements, and evaluations were performed in the same way as in Example 1 with the exception that the chemical composition of the particulate polymer B was changed as shown in Table 1-1 so as to produce a polymer (2-4) in the same way as in Example 10. The results are shown in Tables 1-1 and 1-2.

(Example 12)

Operations, measurements, and evaluations were performed in the same way as in Example 1 with the exception that the chemical composition of the water-soluble polymer was changed as shown in Table 1-1 so as to produce a synthetic water-soluble polymer 2 (WP2) as described below. The results are shown in Tables 1-1 and 1-2.

<Production of synthetic water-soluble polymer 2 (WP2)>

A synthetic water-soluble polymer 2 (synthetic WP2) was produced as a water-soluble polymer. A 10 L septum-equipped flask was charged with 550 parts of deionized water and 17 parts of a 2.0% aqueous solution of L-ascorbic acid as a polymerization accelerator. These materials were heated to a temperature of 40°C, and the inside of the flask was purged with nitrogen gas at a flow rate of 100 mL/min. Next, 75 parts of acrylamide as an amide group-containing monomer and 25 parts of acrylic acid as an acid group-containing monomer were mixed and were injected into the flask using a syringe. Thereafter, 17 parts of a 5.0% aqueous solution of ammonium persulfate as a polymerization initiator was added into the flask using a syringe, and the reaction temperature was set to 60°C. After 2 hours, 10 parts of a 5.0% aqueous solution of ammonium persulfate as a polymerization initiator and 8 parts of a 2.0% aqueous solution of L-ascorbic acid as a polymerization accelerator were added into order to further increase the reaction conversion rate. After a further 2 hours, 10 parts of a 5.0% aqueous solution of ammonium persulfate as a polymerization initiator and 8 parts of a 2.0% aqueous solution of L-ascorbic acid as a polymerization accelerator were added. After 2 hours, 3 parts of a 5% aqueous solution of sodium nitrite as a reaction inhibitor was added into the flask and was stirred. Thereafter, the flask was cooled to 40°C and was converted to an air atmosphere, and then 8% lithium hydroxide aqueous solution was used to adjust the pH of the system to 8.0 and thereby produce a water-soluble polymer aqueous solution (synthetic water-soluble polymer 2 (synthetic WP2)).

(Example 13)

Operations, measurements, and evaluations were performed in the same way as in Example 1 with the exception that the chemical composition of the water-soluble polymer was changed as shown in Table 1-1 so as to produce a synthetic water-soluble polymer 3 (WP3) as described below. The results are shown in Tables 1-1 and 1-2.

<Production of synthetic water-soluble polymer 3 (synthetic WP3)>

A synthetic water-soluble polymer 3 (synthetic WP3) was produced as a water-soluble polymer. In an autoclave equipped with a stirrer, 164 parts of deionized water, 59 parts of acrylonitrile (AN) as a nitrile group-containing monomer, and 39 parts of acrylic acid as an acid group-containing monomer were mixed, 2 parts of 2-acrylamido-2-methylpropane sulfonic acid (AMPS) as another monomer was further added, and then 0.3 parts of potassium persulfate as a polymerization initiator and 1.2 parts of sodium polyoxyethylene alkyl ether sulfate as an emulsifier were added. After thoroughly stirring these materials, a polymerization reaction was performed at a reaction temperature of 80°C for 5 hours to yield a water dispersion containing a synthetic water-soluble polymer 3 (synthetic WP3) as a water-soluble polymer.

(Example 14)

The chemical composition of the particulate polymer A was changed as shown in Table 2-1 so as to produce a polymer (1-8). Moreover, in production of the slurry composition for an adhesive layer, the amount of the water-soluble polymer (synthetic WP1) aqueous solution was changed to 1.9 parts in terms of solid content, and 0.1 parts of a propylene oxide/ethylene oxide copolymer (NOPTECHS® ED052 produced by San Nopco Limited; weight-average molecular weight: 550 to 600 (nominal value)) was compounded as a water-soluble polymer B. With the exception of these points, operations, measurements, and evaluations were performed in the same way as in Example 1. The results are shown in Tables 2-1 and 2-2.

<Production of polymer (1-8)>

A polymer (1-8) having a core-shell structure was produced as a particulate polymer A. First, a core portion was formed in the same way as in Example 1. At the point at which the polymerization conversion rate of the monomer composition for core portion formation reached 96%, 10 parts of styrene, 0.3 parts of methacrylic acid monomer as an acid group-containing monomer, and 20 parts of methyl methacrylate monomer as a (meth)acrylic acid ester monomer were continuously added into the vessel for shell portion formation, the inside of the vessel was heated to 70°C, and polymerization was continued. Cooling was performed to quench the reaction at the point at which the polymerization conversion rate reached 96%. This yielded a water dispersion containing a polymer (1-8) as a particulate polymer A.

(Example 15)

Operations, measurements, and evaluations were performed in the same way as in Example 1 with the exception that a polymer (1-8) produced in the same way as in Example 14 was used as a particulate polymer A. The results are shown in Tables 2-1 and 2-2.

(Example 16)

The chemical composition of the particulate polymer A was changed as shown in Table 2-1 so as to produce a polymer (1-9). Moreover, in production of the slurry composition for an adhesive layer, the amount of the water-soluble polymer (synthetic WP1) aqueous solution was changed to 1.9 parts in terms of solid content, and 0.1 parts of a propylene oxide/ethylene oxide copolymer (NOPTECHS® ED052 produced by San Nopco Limited; weight-average molecular weight: 550 to 600 (nominal value)) was compounded as a water-soluble polymer B. With the exception of these points, operations, measurements, and evaluations were performed in the same way as in Example 1. The results are shown in Tables 2-1 and 2-2.

<Production of polymer (1-9)>

A polymer (1-9) having a core-shell structure was produced as a particulate polymer A. First, a core portion was formed in the same way as in Example 1. At the point at which the polymerization conversion rate of the monomer composition for core portion formation reached 96%, 10 parts of styrene, 0.3 parts of methacrylic acid monomer as an acid group-containing monomer, and 10 parts of methyl methacrylate monomer and 10 parts of methyl acrylate monomer as (meth)acrylic acid ester monomers were continuously added into the vessel for shell portion formation, the inside of the vessel was heated to 70°C, and polymerization was continued. Cooling was performed to quench the reaction at the point at which the polymerization conversion rate reached 96%. This yielded a water dispersion containing a polymer (1-9) as a particulate polymer A.

(Example 17)

The chemical composition of the particulate polymer A was changed as shown in Table 2-1 so as to produce a polymer (1-10). Moreover, in production of the slurry composition for an adhesive layer, the amount of the water-soluble polymer (synthetic WP1) aqueous solution was changed to 1.9 parts in terms of solid content, and 0.1 parts of a propylene oxide/ethylene oxide copolymer (NOPTECHS® ED052 produced by San Nopco Limited; weight-average molecular weight: 550 to 600 (nominal value)) was compounded as a water-soluble polymer B. With the exception of these points, operations, measurements, and evaluations were performed in the same way as in Example 1. The results are shown in Tables 2-1 and 2-2.

<Production of polymer (1-10)>

A polymer (1-10) having a core-shell structure was produced as a particulate polymer A. First, a core portion was formed in the same way as in Example 1. At the point at which the polymerization conversion rate of the monomer composition for core portion formation reached 96%, 10 parts of styrene, 0.3 parts of methacrylic acid monomer as an acid group-containing monomer, and 15 parts of methyl methacrylate monomer and 5 parts of butyl acrylate monomer as a (meth)acrylic acid ester monomers were continuously added into the vessel for shell portion formation, the inside of the vessel was heated to 70°C, and polymerization was continued. Cooling was performed to quench the reaction at the point at which the polymerization conversion rate reached 96%. This yielded a water dispersion containing a polymer (1-10) as a particulate polymer A.

(Example 18)

The chemical composition of the particulate polymer A was changed as shown in Table 2-1 so as to produce a polymer (1-11). Moreover, in production of the slurry composition for an adhesive layer, the amount of the water-soluble polymer (synthetic WP1) aqueous solution was changed to 1.9 parts in terms of solid content, and 0.1 parts of a propylene oxide/ethylene oxide copolymer (NOPTECHS® ED052 produced by San Nopco Limited; weight-average molecular weight: 550 to 600 (nominal value)) was compounded as a water-soluble polymer B. With the exception of these points, operations, measurements, and evaluations were performed in the same way as in Example 1. The results are shown in Tables 2-1 and 2-2.

<Production of polymer (1-11)>

A polymer (1-11) having a core-shell structure was produced as a particulate polymer A. First, a core portion was formed in the same way as in Example 1. At the point at which the polymerization conversion rate of the monomer composition for core portion formation reached 96%, 10 parts of styrene, 0.3 parts of methacrylic acid monomer as an acid group-containing monomer, 15 parts of methyl methacrylate monomer as a (meth)acrylic acid ester monomer, and 5 parts of acrylonitrile monomer were continuously added into the vessel for shell portion formation, the inside of the vessel was heated to 70°C, and polymerization was continued. Cooling was performed to quench the reaction at the point at which the polymerization conversion rate reached 96%. This yielded a water dispersion containing a polymer (1-11) as a particulate polymer A.

(Example 19)

The chemical composition of the particulate polymer A was changed as shown in Table 2-1 so as to produce a polymer (1-12). Moreover, in production of the slurry composition for an adhesive layer, the amount of the water-soluble polymer (synthetic WP1) aqueous solution was changed to 1.9 parts in terms of solid content, and 0.1 parts of a propylene oxide/ethylene oxide copolymer (NOPTECHS® ED052 produced by San Nopco Limited; weight-average molecular weight: 550 to 600 (nominal value)) was compounded as a water-soluble polymer B. With the exception of these points, operations, measurements, and evaluations were performed in the same way as in Example 1. The results are shown in Tables 2-1 and 2-2.

<Production of polymer (1-12)>

A polymer (1-12) having a core-shell structure was produced as a particulate polymer A. First, a 5 MPa pressure-resistant vessel equipped with a stirrer was charged with 20 parts of 2-ethylhexyl acrylate as a (meth)acrylic acid ester monomer, 46.1 parts of styrene as an aromatic vinyl monomer, 2.8 parts of methacrylic acid monomer as an acid group-containing monomer, and 0.8 parts of ethylene glycol dimethacrylate as a cross-linkable monomer for core portion formation. In addition, 1 part of sodium dodecylbenzenesulfonate as an emulsifier, 150 parts of deionized water, and 0.5 parts of potassium persulfate as a polymerization initiator were added, were thoroughly stirred therewith, and then the inside of the vessel was heated to 60°C to initiate polymerization. At the point at which the polymerization conversion rate reached 96%, 10 parts of styrene, 0.3 parts of methacrylic acid monomer as an acid group-containing monomer, and 20 parts of methyl methacrylate monomer as a (meth)acrylic acid ester monomer were continuously added into the vessel for shell portion formation, the inside of the vessel was heated to 70°C, and polymerization was continued. Cooling was performed to quench the reaction at the point at which the polymerization conversion rate reached 96%. This yielded a water dispersion containing a polymer (1-12) as a particulate polymer A.

(Example 20)

Operations, measurements, and evaluations were performed in the same way as in Example 14 with the exception that a water-soluble polymer A was not compounded. The results are shown in Tables 2-1 and 2-2.

(Example 21)

Operations, measurements, and evaluations were performed in the same way as in Example 14 with the exception that a water-soluble polymer A was not compounded and that 1.9 parts of special ammonium polyacrylate (ARON® A6114 produced by Toagosei Co., Ltd.; weight-average molecular weight: 8,000 (nominal value)) and 0.1 parts of a propylene oxide/ethylene oxide copolymer (NOPTECHS® ED052 produced by San Nopco Limited; weight-average molecular weight: 550 to 600 (nominal value)) were used together as water-soluble polymers B. The results are shown in Tables 2-1 and 2-2.

(Example 22)

Operations, measurements, and evaluations were performed in the same way as in Example 14 with the exception that 0.1 parts of a vinyl acetate polymer (polyvinyl alcohol; PVA JF-17 produced by JAPAN VAM & POVAL CO., LTD.; weight-average molecular weight: 70,000 to 80,000 (nominal value)) was compounded instead of a propylene oxide/ethylene oxide copolymer as a water-soluble polymer B. The results are shown in Tables 2-1 and 2-2.

(Example 23)

Operations, measurements, and evaluations were performed in the same way as in Example 14 with the exception that the same polymer (2-2) as in Example 9 was used as a particulate polymer B. The results are shown in Tables 2-1 and 2-2.

(Example 24)

Operations, measurements, and evaluations were performed in the same way as in Example 14 with the exception that the same polymer (2-3) as in Example 10 was used as a particulate polymer B. The results are shown in Tables 2-1 and 2-2.

(Example 25)

Operations, measurements, and evaluations were performed in the same way as in Example 14 with the exception that a polymer (2-6) produced as described below was used as a particulate polymer B. The results are shown in Tables 2-1 and 2-2.

<Production of polymer (2-6)>

A reactor including a stirrer was supplied with 90 parts of deionized water, 0.05 parts of sodium dodecylbenzenesulfonate (NEOPELEX G-15 produced by Kao Corporation) as an emulsifier, and 0.23 parts of ammonium persulfate. The gas phase was purged with nitrogen gas, and the temperature was raised to 70°C.

Meanwhile, a monomer composition was obtained in a separate vessel by mixing 50 parts of deionized water, 0.1 parts of sodium dodecylbenzenesulfonate as an emulsifier, 3 parts of methacrylic acid (MAA) as an acidic group-containing monomer, 25 parts of styrene, 71 parts of 2-ethylhexyl acrylate (2EHA) as a (meth)acrylic acid ester monomer, and 1 part of ethylene glycol dimethacrylate (EDMA) as a cross-linkable monomer. The monomer composition was continuously added into the reactor over 4 hours to perform polymerization. The reaction was carried out at 80°C during the addition. Once the addition was complete, a further 3 hours of stirring was performed at 80°C, and then the reaction was ended to yield a water dispersion containing a polymer (2-6) as a particulate polymer B.

(Comparative Example 1)

Operations, measurements, and evaluations were performed in the same way as in Example 1 with the exception that a particulate polymer (1-5) having a chemical composition shown in Table 3-1 and a glass-transition temperature of 110°C was produced as described below instead of the polymer (1-1) as a particulate polymer A. The results are shown in Tables 3-1 and 3-2.

<Production of polymer (1-5)>

A polymer (1-5) having a core-shell structure was produced. First, a 5 MPa pressure-resistant vessel equipped with a stirrer was charged with 10 parts of 2-ethylhexyl acrylate as a (meth)acrylic acid ester monomer, 56.1 parts of styrene as an aromatic vinyl monomer, 2.8 parts of methacrylic acid monomer as an acid group-containing monomer, and 0.8 parts of ethylene glycol dimethacrylate as a cross-linkable monomer for core portion formation. In addition, 1 part of sodium dodecylbenzenesulfonate as an emulsifier, 150 parts of deionized water, and 0.5 parts of potassium persulfate as a polymerization initiator were added, were thoroughly stirred therewith, and then the inside of the vessel was heated to 60°C to initiate polymerization. At the point at which the polymerization conversion rate reached 96%, 30 parts of styrene and 0.3 parts of methacrylic acid monomer were continuously added into the vessel for shell portion formation, the inside of the vessel was heated to 70°C, and polymerization was continued. Cooling was performed to quench the reaction at the point at which the polymerization conversion rate reached 96%. This yielded a water dispersion containing a particulate polymer (1-5).

(Comparative Example 2)

Operations, measurements, and evaluations were performed in the same way as in Example 1 with the exception that a particulate polymer (2-5) having a chemical composition shown in Table 3-1 and a glass-transition temperature of 30°C was produced as described below instead of the polymer (2-1) as a particulate polymer B. The results are shown in Tables 3-1 and 3-2.

<Production of polymer (2-5)>

A reactor including a stirrer was supplied with 90 parts of deionized water, 0.05 parts of sodium dodecylbenzenesulfonate (NEOPELEX G-15 produced by Kao Corporation) as an emulsifier, and 0.23 parts of ammonium persulfate. The gas phase was purged with nitrogen gas, and the temperature was raised to 70°C.
Meanwhile, a monomer composition was obtained in a separate vessel by mixing 50 parts of deionized water, 0.1 parts of sodium dodecylbenzenesulfonate as an emulsifier, 3 parts of methacrylic acid (MAA) as an acid group-containing monomer, 40 parts of styrene, 56.5 parts of 2-ethylhexyl acrylate (2EHA) as a (meth)acrylic acid ester monomer, and 0.5 parts of allyl methacrylate (AMA) as a cross-linkable monomer. The monomer composition was continuously added into the reactor over 4 hours to perform polymerization. The reaction was carried out at 80°C during the addition. Once the addition was complete, a further 3 hours of stirring was performed at 80°C, and then the reaction was ended to yield a water dispersion containing a particulate polymer (2-5).

(Comparative Example 3)

Operations, measurements, and evaluations were performed in the same way as in Example 1 with the exception that a water-soluble polymer was not compounded. The results are shown in Tables 3-1 and 3-2.

(Comparative Example 4)

Operations, measurements, and evaluations were performed in the same way as in Example 1 with the exception that the solid content concentration was changed to 0.7 mass% in production of the slurry composition for an adhesive layer and that the line count of the gravure roll used in application was changed such that the mass per unit area was the same value as in Example 1. The results are shown in Tables 3-1 and 3-2.

(Comparative Example 5)

Operations, measurements, and evaluations were performed in the same way as in Example 1 with the exception that the solid content concentration was changed to 30 mass% in production of the slurry composition for an adhesive layer. The results are shown in Tables 3-1 and 3-2.

(Comparative Example 6)

Operations, measurements, and evaluations were performed in the same way as in Example 1 with the exception that a polymer (1-6) having a chemical composition shown in Table 3-1 that was produced as described below was compounded as a particulate polymer A, that a polymer corresponding to a particulate polymer B and a water-soluble polymer were not compounded, and that the solid content concentration of the slurry composition for an adhesive layer was changed to 20 mass%. The results are shown in Tables 3-1 and 3-2.

<Production of polymer (1-6)>

A polymer (1-6) having a core-shell structure was produced as a particulate polymer A. First, a 5 MPa pressure-resistant vessel equipped with a stirrer was charged with 69.2 parts of butyl acrylate as a (meth)acrylic acid ester monomer, 29.7 parts of methacrylic acid monomer as an acid group-containing monomer, and 0.8 parts of ethylene glycol dimethacrylate for core portion formation. In addition, 1 part of sodium dodecylbenzenesulfonate as an emulsifier, 150 parts of deionized water, and 0.5 parts of potassium persulfate as a polymerization initiator were added, were thoroughly stirred therewith, and then the inside of the vessel was heated to 60°C to initiate polymerization. Cooling was performed to quench the reaction at the point at which the polymerization conversion rate reached 96%. This yielded a water dispersion containing a polymer (1-6) as a particulate polymer A.

(Comparative Example 7)

Operations, measurements, and evaluations were performed in the same way as in Example 1 with the exception that a particulate polymer (1-7) having a chemical composition shown in Table 3-1 and a glass-transition temperature of 105°C, which was produced as described below, was used instead of a particulate polymer A, that the same polymer (2-2) as in Example 9 was used, and that the solid content concentration of the slurry composition for an adhesive layer was changed to 30 mass%. The results are shown in Tables 3-1 and 3-2.

<Production of polymer (1-7)>

A polymer (1-7) having a core-shell structure was produced. First, a 5 MPa pressure-resistant vessel equipped with a stirrer was charged with 58.5 parts of methyl methacrylate monomer and 8.33 parts of butyl acrylate as (meth)acrylic acid ester monomers, 2.8 parts of methacrylic acid monomer as an acid group-containing monomer, and 0.07 parts of allyl methacrylate as a cross-linkable monomer for core portion formation. In addition, 1 part of sodium dodecylbenzenesulfonate as an emulsifier, 150 parts of deionized water, and 0.5 parts of potassium persulfate as a polymerization initiator were added, were thoroughly stirred therewith, and then the inside of the vessel was heated to 60°C to initiate polymerization. At the point at which the polymerization conversion rate reached 96%, 30 parts of styrene and 0.3 parts of methacrylic acid monomer were continuously added into the vessel for shell portion formation, the inside of the vessel was heated to 70°C, and polymerization was continued. Cooling was performed to quench the reaction at the point at which the polymerization conversion rate reached 96%. This yielded a water dispersion containing a particulate polymer (1-7).

Note that in Tables 1-1 to 3-2, shown below:

"MMA" indicates methyl methacrylate;
"BA" indicates butyl acrylate;
"ST" indicates styrene;
"MAA" indicates methacrylic acid;
"HEA" indicates 2-hydroxyethyl acrylate;
"AMA" indicates allyl methacrylate;
"EDMA" indicates ethylene glycol dimethacrylate;
"2EHA" indicates 2-ethylhexyl acrylate;
"EA" indicates ethyl acrylate;
"AAm" indicates acrylamide;
"AA" indicates acrylic acid;
"AN" indicates acrylonitrile;
"AMPS" indicates 2-acrylamido-2-methylpropane sulfonic acid; and
"WP" indicates water-soluble polymer.

[Table 1-1]

| | | | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|---|
| Composition for adhesive layer | Particulate polymer A | Chemical composition (mass%) | | Type | Polymer 1-1 | Polymer 1-1 | Polymer 1-1 | Polymer 1-1 | Polymer 1-2 | Polymer 1-3 | Polymer 1-4 | Polymer 1-2 | Polymer 1-1 | Polymer 1-1 | Polymer 1-1 | Polymer 1-1 | Polymer 1-1 |
| | | | Core | MMA | 45 | 45 | 45 | 45 | 0 | 0 | 0 | 0 | 45 | 45 | 45 | 45 | 45 |
| | | | | BA | 21.83 | 21.83 | 21.83 | 21.83 | 0 | 0 | 0 | 0 | 21.83 | 21.83 | 21.83 | 21.83 | 21.83 |
| | | | | ST | 0 | 0 | 0 | 0 | 31.1 | 51.1 | 1.1 | 31.1 | 0 | 0 | 0 | 0 | 0 |
| | | | | MAA | 2.8 | 2.8 | 2.8 | 2.8 | 2.8 | 2.8 | 2.8 | 2.8 | 2.8 | 2.8 | 2.8 | 2.8 | 2.8 |
| | | | | AMA | 0.07 | 0.07 | 0.07 | 0.07 | 0 | 0 | 0 | 0 | 0.07 | 0.07 | 0.07 | 0.07 | 0.07 |
| | | | | EDMA | 0 | 0 | 0 | 0 | 0.8 | 0.8 | 0.8 | 0.8 | 0 | 0 | 0 | 0 | 0 |
| | | | | 2EHA | 0 | 0 | 0 | 0 | 35 | 15 | 65 | 35 | 0 | 0 | 0 | 0 | 0 |
| | | | Shell | ST | 30 | 30 | 30 | 30 | 30 | 30 | 30 | 30 | 30 | 30 | 30 | 30 | 30 |
| | | | | MAA | 0.3 | 0.3 | 0.3 | 0.3 | 0.3 | 0.3 | 0.3 | 0.3 | 0.3 | 0.3 | 0.3 | 0.3 | 0.3 |
| | | | | MMA (methyl methacrylate) | 0 | 0 | 0 | 0 | 0 | 0 | 0 | 0 | 0 | 0 | 0 | 0 | 0 |
| | | | | MA (methyl acrylate) | 0 | 0 | 0 | 0 | 0 | 0 | 0 | 0 | 0 | 0 | 0 | 0 | 0 |
| | | | | BA | 0 | 0 | 0 | 0 | 0 | 0 | 0 | 0 | 0 | 0 | 0 | 0 | 0 |
| | | | | AN | 0 | 0 | 0 | 0 | 0 | 0 | 0 | 0 | 0 | 0 | 0 | 0 | 0 |
| | | (Meth)acrylic acid ester ratio of shell (mass%) | | | 0.0 | 0.0 | 0.0 | 0.0 | 0.0 | 0.0 | 0.0 | 0.0 | 0.0 | 0.0 | 0.0 | 0.0 | 0.0 |
| | | MAA ratio of shell (mass%) | | | 0.99 | 0.99 | 0.99 | 0.99 | 0.99 | 0.99 | 0.99 | 0.99 | 0.99 | 0.99 | 0.99 | 0.99 | 0.99 |
| | | Shell ratio (mass%; based on total with core) | | | 30.3 | 30.3 | 30.3 | 30.3 | 30.3 | 30.3 | 30.3 | 30.3 | 30.3 | 30.3 | 30.3 | 30.3 | 30.3 |
| | | Amount (parts by mass) | | | 100 | 100 | 100 | 100 | 100 | 100 | 100 | 100 | 100 | 100 | 100 | 100 | 100 |

(continued)

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Particulate polymer B | | Volume-average particle diameter (nm) | 500 | 500 | 500 | 500 | 650 | 650 | 650 | 650 | 500 | 500 | 500 | 500 | 500 |
| | | Glass-transition temperature (°C) | 60 | 60 | 60 | 60 | 60 | 100 | 30 | 60 | 60 | 60 | 60 | 60 | 60 |
| | | Type | Polymer 2-1 | Polymer 2-1 | Polymer 2-1 | Polymer 2-1 | Polymer 2-1 | Polymer 2-1 | Polymer 2-1 | Polymer 2-1 | Polymer 2-2 | Polymer 2-3 | Polymer 2-4 | Polymer 2-1 | Polymer 2-1 |
| | Chemical composition (mass%) | ST | 65 | 65 | 65 | 65 | 65 | 65 | 65 | 65 | 0 | 25 | 35 | 65 | 65 |
| | | BD | 32.5 | 32.5 | 32.5 | 32.5 | 32.5 | 32.5 | 32.5 | 32.5 | 0 | 0 | 0 | 32.5 | 32.5 |
| | | MAA | 1 | 1 | 1 | 1 | 1 | 1 | 1 | 1 | 2 | 3 | 3 | 1 | 1 |
| | | HEA | 1 | 1 | 1 | 1 | 1 | 1 | 1 | 1 | 0 | 0 | 0 | 1 | 1 |
| | | BA | 0 | 0 | 0 | 0 | 0 | 0 | 0 | 0 | 95 | 0 | 0 | 0 | 0 |
| | | AN | 0 | 0 | 0 | 0 | 0 | 0 | 0 | 0 | 2.5 | 0 | 0 | 0 | 0 |
| | | 2EHA | 0 | 0 | 0 | 0 | 0 | 0 | 0 | 0 | 0 | 71.5 | 61.5 | 0 | 0 |
| | | AMA | 0.5 | 0.5 | 0.5 | 0.5 | 0.5 | 0.5 | 0.5 | 0.5 | 0.5 | 0.5 | 0.5 | 0.5 | 0.5 |
| | | EDMA | 0 | 0 | 0 | 0 | 0 | 0 | 0 | 0 | 0 | 0 | 0 | 0 | 0 |
| | Amount (parts by mass) | | 10 | 10 | 10 | 10 | 10 | 10 | 10 | 10 | 10 | 10 | 10 | 10 | 10 |
| | Volume-average particle diameter (nm) | | 130 | 130 | 130 | 130 | 130 | 130 | 130 | 130 | 150 | 150 | 150 | 130 | 130 |
| | Glass-transition temperature (°C) | | 10 | 10 | 10 | 10 | 10 | 10 | 10 | 10 | -20 | -20 | 10 | 10 | 10 |

[Table 1-2]

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Composition for adhesive layer | Water-soluble polymer A | Type | Synthetic WP1 | Synthetic WP1 | Synthetic WP1 | Synthetic WP1 | Synthetic WP1 | Synthetic WP1 | Synthetic WP1 | Synthetic WP1 | Synthetic WP1 | Synthetic WP1 | Synthetic WP1 | Synthetic WP2 | Synthetic WP3 |
| | | Chemical composition (mass%) — EA | 65 | 65 | 65 | 65 | 65 | 65 | 65 | 65 | 65 | 65 | 65 | 0 | 0 |
| | | EDMA | 1 | 1 | 1 | 1 | 1 | 1 | 1 | 1 | 1 | 1 | 1 | 0 | 0 |
| | | MAA | 34 | 34 | 34 | 34 | 34 | 34 | 34 | 34 | 34 | 34 | 34 | 0 | 0 |
| | | AAm | 0 | 0 | 0 | 0 | 0 | 0 | 0 | 0 | 0 | 0 | 0 | 75 | 0 |
| | | AA | 0 | 0 | 0 | 0 | 0 | 0 | 0 | 0 | 0 | 0 | 0 | 25 | 39 |
| | | AN | 0 | 0 | 0 | 0 | 0 | 0 | 0 | 0 | 0 | 0 | 0 | 0 | 59 |
| | | AMPS | 0 | 0 | 0 | 0 | 0 | 0 | 0 | 0 | 0 | 0 | 0 | 0 | 2 |
| | | Weight-average molecular weight (-) | 280,000 | 280,000 | 280,000 | 280,000 | 280,000 | 280,000 | 280,000 | 280,000 | 280,000 | 280,000 | 280,000 | 350,000 | 350,000 |
| | | Amount (parts by mass) | 2 | 2 | 2 | 2 | 2 | 2 | 2 | 2 | 2 | 2 | 2 | 2 | 2 |

| | | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|
| Water-soluble polymer B | Type | | ARON A6114 Special ammonium polyacrylate | 0 | 0 | 0 | 0 | 0 | 0 | 0 | 0 | 0 | 0 | 0 | 0 | 0 |
| | | | NOPTECHS ED052 PO/EO copolymer | 0 | 0 | 0 | 0 | 0 | 0 | 0 | 0 | 0 | 0 | 0 | 0 | 0 |
| | | | PVA JF-17 Vinyl acetate polymer | 0 | 0 | 0 | 0 | 0 | 0 | 0 | 0 | 0 | 0 | 0 | 0 | 0 |
| | Amount (parts by mass) | | | 0 | 0 | 0 | 0 | 0 | 0 | 0 | 0 | 0 | 0 | 0 | 0 | 0 |
| Slurry physical properties | Solid content concentration (mass%) | | | 1 | 5 | 10 | 25 | 5 | 5 | 5 | 5 | 5 | 5 | 5 | 5 | 5 |
| | pH | | | 8 | 8 | 8 | 8 | 8 | 8 | 8 | 7 | 8 | 8 | 8 | 8 | 8 |
| Adhesive layer physical properties | Mass per unit area (g/m²) | | | 0.15 | 0.1 | 0.15 | 0.2 | 0.1 | 0.1 | 0.1 | 0.1 | 0.1 | 0.1 | 0.1 | 0.1 | 0.1 |
| Coatability evaluation | Streaks and unevenness | | | Good | Good | Good | Good | Good | Good | Good | Slight streaks | Good | Good | Good | Good | Good |
| | Low mass per unit area properties | | | SA | SA | A | B | SA | SA | SA | B | SA | SA | SA | SA | SA |
| | Uniformity | | | SA | SA | A | B | SA | SA | SA | B | SA | SA | SA | SA | SA |

| | | | Exam-ple 1 | Exam-ple 2 | Exam-ple 3 | Exam-ple 4 | Exam-ple 5 | Exam-ple 6 | Exam-ple 7 | Exam-ple 8 | Exam-ple 9 | Exam-ple 10 | Exam-ple 11 | Exam-ple 12 | Exam-ple 13 |
|---|---|---|---|---|---|---|---|---|---|---|---|---|---|---|---|
| Evalua-tions | Battery char-acteristics | Swelling properties of battery | A | A | A | A | A | B | A | B | A | A | B | A | A |
| | | Resistance | A | A | A | B | A | A | A | B | A | A | A | A | A |
| | | Adhesiveness | A | A | A | A | A | B | A | B | A | A | B | A | A |
| | | Electrolyte solution injectability | C | C | C | C | C | C | C | C | C | C | C | C | C |
| | | Cycle durability | C | C | C | C | C | C | C | C | C | C | C | C | C |

[Table 2-1]

| | | | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|---|
| Particulate polymer A | Type | | Polymer 1-8 | Polymer 1-8 | Polymer 1-9 | Polymer 1-10 | Polymer 1-11 | Polymer 1-12 | Polymer 1-8 | Polymer 1-8 | Polymer 1-8 | Polymer 1-8 | Polymer 1-8 | Polymer 1-8 |
| | Chemical composition (mass%) | Core MMA | 45 | 45 | 45 | 45 | 45 | 0 | 45 | 45 | 45 | 45 | 45 | 45 |
| | | Core BA | 21.83 | 21.83 | 21.83 | 21.83 | 21.83 | 0 | 21.83 | 21.83 | 21.83 | 21.83 | 21.83 | 21.83 |
| | | Core ST | 0 | 0 | 0 | 0 | 0 | 46.1 | 0 | 0 | 0 | 0 | 0 | 0 |
| | | Core MAA | 2.8 | 2.8 | 2.8 | 2.8 | 2.8 | 2.8 | 2.8 | 2.8 | 2.8 | 2.8 | 2.8 | 2.8 |
| | | Core AMA | 0.07 | 0.07 | 0.07 | 0.07 | 0.07 | 0 | 0.07 | 0.07 | 0.07 | 0.07 | 0.07 | 0.07 |
| | | Core EDMA | 0 | 0 | 0 | 0 | 0 | 0.8 | 0 | 0 | 0 | 0 | 0 | 0 |
| | | Core 2EHA | 0 | 0 | 0 | 0 | 0 | 20 | 0 | 0 | 0 | 0 | 0 | 0 |
| | | Shell ST | 10 | 10 | 10 | 10 | 10 | 10 | 10 | 10 | 10 | 10 | 10 | 10 |
| | | Shell MAA | 0.3 | 0.3 | 0.3 | 0.3 | 0.3 | 0.3 | 0.3 | 0.3 | 0.3 | 0.3 | 0.3 | 0.3 |
| | | Shell MMA (methyl methacrylate) | 20 | 20 | 10 | 15 | 15 | 20 | 20 | 20 | 20 | 20 | 20 | 20 |
| | | Shell MA (methyl acrylate) | 0 | 0 | 10 | 0 | 0 | 0 | 0 | 0 | 0 | 0 | 0 | 0 |
| | | Shell BA | 0 | 0 | 0 | 5 | 0 | 0 | 0 | 0 | 0 | 0 | 0 | 0 |
| | | Shell AN | 0 | 0 | 0 | 0 | 5 | 0 | 0 | 0 | 0 | 0 | 0 | 0 |
| | (Meth)acrylic acid ester ratio of shell (mass%) | | 66.0 | 66.0 | 66.0 | 66.0 | 49.5 | 66.0 | 66.0 | 66.0 | 66.0 | 66.0 | 66.0 | 66.0 |
| | MAA ratio of shell (mass%) | | 0.99 | 0.99 | 0.99 | 0.99 | 0.99 | 0.99 | 0.99 | 0.99 | 0.99 | 0.99 | 0.99 | 0.99 |
| | Shell ratio (mass%; based on total with core) | | 30.3 | 30.3 | 30.3 | 30.3 | 30.3 | 30.3 | 30.3 | 30.3 | 30.3 | 30.3 | 30.3 | 30.3 |
| Composition for adhesive layer | Amount (parts by mass) | | 100 | 100 | 100 | 100 | 100 | 100 | 100 | 100 | 100 | 100 | 100 | 100 |

(continued)

| | | | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|---|
| | | Vohune-average particle diameter (nm) | 500 | 500 | 500 | 500 | 500 | 500 | 500 | 500 | 500 | 500 | 500 | 500 |
| | | Glass-transition temperature (°C) | 60 | 60 | 60 | 60 | 60 | 60 | 60 | 60 | 60 | 60 | 60 | 60 |
| | Type | | Polymer 2-1 | Polymer 2-1 | Polymer 2-1 | Polymer 2-1 | Polymer 2-1 | Polymer 2-1 | Polymer 2-1 | Polymer 2-1 | Polymer 2-1 | Polymer 2-2 | Polymer 2-3 | Polymer 2-6 |
| Particulate polymer B | Chemical composition (mass%) | ST | 65 | 65 | 65 | 65 | 65 | 65 | 65 | 65 | 65 | 0 | 25 | 25 |
| | | BD | 32.5 | 32.5 | 32.5 | 32.5 | 32.5 | 32.5 | 32.5 | 32.5 | 32.5 | 0 | 0 | 0 |
| | | MAA | 1 | 1 | 1 | 1 | 1 | 1 | 1 | 1 | 1 | 2 | 3 | 3 |
| | | HEA | 1 | 1 | 1 | 1 | 1 | 1 | 1 | 1 | 1 | 0 | 0 | 0 |
| | | BA | 0 | 0 | 0 | 0 | 0 | 0 | 0 | 0 | 0 | 95 | 0 | 0 |
| | | AN | 0 | 0 | 0 | 0 | 0 | 0 | 0 | 0 | 0 | 2.5 | 0 | 0 |
| | | 2EHA | 0 | 0 | 0 | 0 | 0 | 0 | 0 | 0 | 0 | 0 | 71.5 | 71 |
| | | AMA | 0.5 | 0.5 | 0.5 | 0.5 | 0.5 | 0.5 | 0.5 | 0.5 | 0.5 | 0.5 | 0.5 | 0 |
| | | EDMA | 0 | 0 | 0 | 0 | 0 | 0 | 0 | 0 | 0 | 0 | 0 | 1 |
| | Amount (parts by mass) | | 10 | 10 | 10 | 10 | 10 | 10 | 10 | 10 | 10 | 10 | 10 | 10 |
| | Volume-average particle diameter (nm) | | 130 | 130 | 130 | 130 | 130 | 130 | 130 | 130 | 130 | 150 | 150 | 130 |
| | Glass-transition temperature (°C) | | 10 | 10 | 10 | 10 | 10 | 10 | 10 | 10 | 10 | -20 | -20 | -20 |

34

[Table 2-2]

| Composition for adhesive layer | | | | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|---|---|
| | Water-soluble polymer A | Type | | Synthetic WP1 | Synthetic WP1 | Synthetic WP1 | Synthetic WP1 | Synthetic WP1 | Synthetic WP1 | - | - | Synthetic WP1 | Synthetic WP1 | Synthetic WP1 | Synthetic WP1 |
| | | Chemical composition (mass%) | EA | 65 | 65 | 65 | 65 | 65 | 65 | 0 | 0 | 65 | 65 | 65 | 65 |
| | | | EDMA | 1 | 1 | 1 | 1 | 1 | 1 | 0 | 0 | 1 | 1 | 1 | 1 |
| | | | MAA | 34 | 34 | 34 | 34 | 34 | 34 | 0 | 0 | 34 | 34 | 34 | 34 |
| | | | AAm | 0 | 0 | 0 | 0 | 0 | 0 | 0 | 0 | 0 | 0 | 0 | 0 |
| | | | AA | 0 | 0 | 0 | 0 | 0 | 0 | 0 | 0 | 0 | 0 | 0 | 0 |
| | | | AN | 0 | 0 | 0 | 0 | 0 | 0 | 0 | 0 | 0 | 0 | 0 | 0 |
| | | | AMPS | 0 | 0 | 0 | 0 | 0 | 0 | 0 | 0 | 0 | 0 | 0 | 0 |
| | | Weight-average molecular weight (-) | | 280,000 | 280,000 | 280,000 | 280,000 | 280,000 | 280,000 | - | - | 280,000 | 280,000 | 280,000 | 280,000 |
| | | Amount (parts by mass) | | 1.9 | 2 | 1.9 | 1.9 | 1.9 | 1.9 | - | - | 1.9 | 1.9 | 1.9 | 1.9 |
| | Water-soluble polymer B | Type | ARON A6114 Special ammonium polyacrylate | 0 | 0 | 0 | 0 | 0 | 0 | 0 | 1.9 | 0 | 0 | 0 | 0 |
| | | | NOPTECH S ED052 PO/EO co-polymer | 0.1 | 0 | 0.1 | 0.1 | 0.1 | 0.1 | 0.1 | 0.1 | 0 | 0.1 | 0.1 | 0.1 |
| | | | PVA JF-17 Vinyl acetate polymer | 0 | 0 | 0 | 0 | 0 | 0 | 0 | 0 | 0.1 | 0 | 0 | 0 |
| | | Amount (parts by mass) | | 0.1 | 0 | 0.1 | 0.1 | 0.1 | 0.1 | 0.1 | 2 | 0.1 | 0.1 | 0.1 | 0.1 |
| | Slurry physical properties | Solid content concentration (mass%) | | 1 | 1 | 1 | 1 | 1 | 1 | 1 | 1 | 1 | 1 | 1 | 1 |
| | | pH | | 8 | 8 | 8 | 8 | 8 | 8 | 8 | 8 | 8 | 8 | 8 | 8 |

(continued)

| | | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|
| Adhesive layer physical properties | Mass per unit area (g/m²) | 0.15 | 0.15 | 0.15 | 0.15 | 0.15 | 0.15 | 0.15 | 0.15 | 0.15 | 0.15 | 0.15 | 0.15 |
| Coatability evaluation | Streaks and unevenness | Good | Good | Good | Good | Good | Good | Slight streaks | Good | Good | Good | Good | Good |
| | Low mass per unit area properties | SA | SA | SA | SA | SA | SA | B | SA | SA | SA | SA | SA |
| | Uniformity | SA | A | SA | SA | SA | SA | A | A | SA | SA | SA | SA |
| Evaluations | Battery characteristics — Swelling properties of battery | A | A | A | A | A | A | A | A | A | A | A | A |
| | Resistance | A | A | A | A | A | A | B | A | A | A | A | A |
| | Adhesiveness | B | B | B | B | B | B | B | B | B | B | B | B |
| | Electrolyte solution injectability | A | A | A | A | B | A | A | B | B | A | A | A |
| | Cycle durability | A | A | A | B | A | A | A | B | B | A | A | A |

[Table 3-1]

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Composition for adhesive layer | Particulate polymer A | | Type | Polymer 1-5 | Polymer 1-1 | Polymer 1-1 | Polymer 1-1 | Polymer 1-1 | Polymer 1-6 | Polymer 1-7 |
| | | Chemical composition (mass%) | Core | MMA | 0 | 45 | 45 | 45 | 45 | 0 | 58.5 |
| | | | | BA | 0 | 21.83 | 21.83 | 21.83 | 21.83 | 69.2 | 8.33 |
| | | | | ST | 56.1 | 0 | 0 | 0 | 0 | 0 | 0 |
| | | | | MAA | 2.8 | 2.8 | 2.8 | 2.8 | 2.8 | 30 | 2.8 |
| | | | | AMA | 0 | 0.07 | 0.07 | 0.07 | 0.07 | 0 | 0.07 |
| | | | | EDMA | 0.8 | 0 | 0 | 0 | 0 | 0.8 | 0 |
| | | | | 2EHA | 10 | 0 | 0 | 0 | 0 | 0 | 0 |
| | | | Shell | ST | 30 | 30 | 30 | 30 | 30 | 0 | 30 |
| | | | | MAA | 0.3 | 0.3 | 0.3 | 0.3 | 0.3 | 0 | 0.3 |
| | | | | MMA (methyl methacrylate) | 0 | 0 | 0 | 0 | 0 | 0 | 0 |
| | | | | MA (methyl acrylate) | 0 | 0 | 0 | 0 | 0 | 0 | 0 |
| | | | | BA | 0 | 0 | 0 | 0 | 0 | 0 | 0 |
| | | | | AN | 0 | 0 | 0 | 0 | 0 | 0 | 0 |
| | | (Meth)acrylic acid ester ratio of shell (mass%) | | | 0.0 | 0.0 | 0.0 | 0.0 | 0.0 | 0.0 | 0.0 |
| | | MAA ratio of shell (mass%) | | | 0.99 | 0.99 | 0.99 | 0.99 | 0.99 | 0 | 0.99 |
| | | Shell ratio (mass%; based on total with core) | | | 30.3 | 30.3 | 30.3 | 30.3 | 30.3 | 0 | 30.3 |
| | | Amount (parts by mass) | | | 100 | 100 | 100 | 100 | 100 | 100 | 100 |
| | | Volume-average particle diameter (nm) | | | 500 | 500 | 500 | 500 | 500 | 500 | 500 |
| | | Glass-transition temperature (°C) | | | 110 | 60 | 60 | 60 | 60 | 59 | 105 |
| | | Type | | | Polymer 2-1 | Polymer 2-5 | Polymer 2-1 | Polymer 2-1 | Polymer 2-1 | 0 | Polymer 2-2 |

(continued)

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Particulate polymer B | | Chemical composition (mass%) | ST | 65 | 40 | 65 | 65 | 65 | 0 | 0 |
| | | | BD | 32.5 | 0 | 32.5 | 32.5 | 32.5 | 0 | 0 |
| | | | MAA | 1 | 3 | 1 | 1 | 1 | 0 | 2 |
| | | | HEA | 1 | 0 | 1 | 1 | 1 | 0 | 0 |
| | | | BA | 0 | 0 | 0 | 0 | 0 | 0 | 95 |
| | | | AN | 0 | 0 | 0 | 0 | 0 | 0 | 2.5 |
| | | | 2EHA | 0 | 56.5 | 0 | 0 | 0 | 0 | 0 |
| | | | AMA | 0.5 | 0.5 | 0.5 | 0.5 | 0.5 | 0 | 0.5 |
| | | | EDMA | 0 | 0 | 0 | 0 | 0 | 0 | 0 |
| | | Amount (parts by mass) | | 10 | 10 | 10 | 10 | 10 | 0 | 10 |
| | | Volume-average particle diameter (nm) | | 130 | 150 | 130 | 130 | 130 | 0 | 150 |
| | | Glass-transition temperature (°C) | | 10 | 30 | 10 | 10 | 10 | 0 | -20 |

[Table 3-2]

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Composition for adhesive layer | Water-soluble polymer A | Type | | Synthetic WP1 | Synthetic WP1 | - | Synthetic WP1 | Synthetic WP1 | - | Synthetic WP1 |
| | | Chemical composition (mass%) | EA | 65 | 65 | 0 | 65 | 65 | 0 | 65 |
| | | | EDMA | 1 | 1 | 0 | 1 | 1 | 0 | 1 |
| | | | MAA | 34 | 34 | 0 | 34 | 34 | 0 | 34 |
| | | | AAm | 0 | 0 | 0 | 0 | 0 | 0 | 0 |
| | | | AA | 0 | 0 | 0 | 0 | 0 | 0 | 0 |
| | | | AN | 0 | 0 | 0 | 0 | 0 | 0 | 0 |
| | | | AMPS | 0 | 0 | 0 | 0 | 0 | 0 | 0 |
| | | Weight-average molecular weight (-) | | 280,000 | 280,000 | 0 | 280,000 | 280,000 | 0 | 280,000 |
| | | Amount (parts by mass) | | 2 | 2 | 0 | 2 | 2 | 0 | 2 |
| | Water-soluble polymer B | Type | ARON A6114 Special ammonium polyacrylate | 0 | 0 | 0 | 0 | 0 | 0 | 0 |
| | | | NOPTECHS ED052 PO/EO copolymer | 0 | 0 | 0 | 0 | 0 | 0 | 0 |
| | | | PVA JF-17 Vinyl acetate polymer | 0 | 0 | 0 | 0 | 0 | 0 | 0 |
| | | Amount (parts by mass) | | 0 | 0 | 0 | 0 | 0 | 0 | 0 |
| | Shiny physical properties | Solid content concentration (mass%) | | 5 | 5 | 5 | 0.7 | 30 | 20 | 30 |
| | | pH | | 8 | 8 | 8 | 8 | 8 | 8 | 8 |

(continued)

| Evaluations | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| | Adhesive layer physical properties | Mass per unit area (g/m²) | 0.1 | 0.1 | 0.1 | 0.1 | 0.3 | 0.15 | 0.3 |
| | Coatability evaluation | Streaks and unevenness | Good | Good | Streaks | Unevenness | Good | - | Good |
| | | Low mass per unit area properties | SA | SA | C | A | C | B | C |
| | | Uniformity | SA | SA | C | C | C | B | C |
| | Battery characteristics | Swelling properties of battery | C | C | B | B | B | B | A |
| | | Resistance | C | C | C | A | C | C | C |
| | | Adhesiveness | C | C | B | B | B | B | A |
| | | Electrolyte solution injectability | C | C | C | C | C | C | C |
| | | Cycle durability | C | C | C | C | C | C | C |

It can be seen from Examples 1 to 25 that by using a slurry composition for a non-aqueous secondary battery adhesive layer that has a solid content concentration of not less than 1 mass% and not more than 25 mass% and that contains a particulate polymer A having a glass-transition temperature of not lower than 30°C and not higher than 100°C, a particulate polymer B having a glass-transition temperature of 20°C or lower, a water-soluble polymer, and a dispersion medium, it was possible to form an adhesive layer that has excellent uniformity and can reduce internal resistance of an obtained non-aqueous secondary battery.

INDUSTRIAL APPLICABILITY

According to the present disclosure, it is possible to provide a slurry composition for a non-aqueous secondary battery adhesive layer with which it is possible to form an adhesive layer that has excellent uniformity and can reduce internal resistance of an obtained non-aqueous secondary battery.

Moreover, according to the present disclosure, it is possible to provide an adhesive layer for a non-aqueous secondary battery that has excellent uniformity and can reduce internal resistance of a non-aqueous secondary battery and also to provide a method of producing this adhesive layer for a non-aqueous secondary battery.

Furthermore, according to the present disclosure, it is possible to provide a member for a non-aqueous secondary battery that can provide a non-aqueous secondary battery having low internal resistance.

Also, according to the present disclosure, it is possible to provide a non-aqueous secondary battery having low internal resistance.

**Claims**

1. A slurry composition for a non-aqueous secondary battery adhesive layer comprising: at least two types of particulate polymers; a water-soluble polymer; and a dispersion medium, wherein

   the at least two types of particulate polymers include a particulate polymer A having a glass-transition temperature of not lower than 30°C and not higher than 100°C and a particulate polymer B having a glass-transition temperature of 20°C or lower, and
   the slurry composition for a non-aqueous secondary battery adhesive layer has a solid content concentration of not less than 1 mass% and not more than 25 mass%.

2. The slurry composition for a non-aqueous secondary battery adhesive layer according to claim 1, wherein the particulate polymer A includes a (meth)acrylic acid ester monomer unit.

3. The slurry composition for a non-aqueous secondary battery adhesive layer according to claim 1, wherein the particulate polymer B is a styrenic polymer or an acrylic polymer.

4. The slurry composition for a non-aqueous secondary battery adhesive layer according to claim 1, wherein the water-soluble polymer includes an acid group-containing monomer unit in a proportion of not less than 5 mass% and not more than 50 mass%.

5. The slurry composition for a non-aqueous secondary battery adhesive layer according to claim 1, having a pH of not lower than 7 and not higher than 9.

6. The slurry composition for a non-aqueous secondary battery adhesive layer according to claim 1, further comprising either or both of a preservative and a defoamer.

7. The slurry composition for a non-aqueous secondary battery adhesive layer according to claim 1, wherein the particulate polymer A has a core-shell structure and, when all repeating units forming a shell portion are taken to be 100 mass%, includes a (meth)acrylic acid ester monomer unit in a proportion of 30.0 mass% or more in the shell portion.

8. The slurry composition for a non-aqueous secondary battery adhesive layer according to claim 1, wherein the particulate polymer A has a core-shell structure, and a shell portion includes, as repeating units, a methyl methacrylate unit and a methyl acrylate unit as (meth)acrylic acid ester monomer units and a carboxy group-containing monomer unit as an acid group-containing monomer unit.

9.  An adhesive layer for a non-aqueous secondary battery formed using the slurry composition for a non-aqueous secondary battery adhesive layer according to any one of claims 1 to 8.

10. A method of producing an adhesive layer for a non-aqueous secondary battery comprising applying the slurry composition for a non-aqueous secondary battery adhesive layer according to any one of claims 1 to 8 onto a substrate by gravure coating or slot-die coating.

11. A member for a non-aqueous secondary battery comprising the adhesive layer for a non-aqueous secondary battery according to claim 9 on a substrate.

12. The member for a non-aqueous secondary battery according to claim 11, wherein the substrate includes an organic separator material, and the adhesive layer for a non-aqueous secondary battery is disposed adjacently to at least one surface of the organic separator material or is disposed adjacently to a surface of a heat-resistant layer that is included on at least one surface of the organic separator material.

13. A non-aqueous secondary battery comprising the member for a non-aqueous secondary battery according to claim 11.

## INTERNATIONAL SEARCH REPORT

| International application No. |
| --- |
| **PCT/JP2022/032881** |

### A. CLASSIFICATION OF SUBJECT MATTER

*H01M 50/449*(2021.01)i; *C08L 25/00*(2006.01)i; *C08L 33/04*(2006.01)i; *C08L 51/06*(2006.01)i; *C08L 101/14*(2006.01)i;
*H01M 50/403*(2021.01)i; *H01M 50/414*(2021.01)i; *H01M 50/42*(2021.01)i; *H01M 50/443*(2021.01)i;
*H01M 50/451*(2021.01)i; *H01M 50/457*(2021.01)i; *H01M 50/489*(2021.01)i
FI: H01M50/449; H01M50/443 B; H01M50/42; H01M50/414; H01M50/403 D; H01M50/457; H01M50/489; C08L51/06;
C08L25/00; C08L33/04; C08L101/14; H01M50/443 E; H01M50/451

According to International Patent Classification (IPC) or to both national classification and IPC

### B. FIELDS SEARCHED

Minimum documentation searched (classification system followed by classification symbols)

H01M50/449; C08L25/00; C08L33/04; C08L51/06; C08L101/14; H01M50/403; H01M50/414; H01M50/42; H01M50/443;
H01M50/451; H01M50/457; H01M50/489

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2015-028843 A (NIPPON ZEON CO., LTD.) 12 February 2015 (2015-02-12) claims 1, 2, 4, paragraphs [0096]-[0098], [0100], example 1 | 1-13 |
| A | JP 2013-206846 A (NIPPON ZEON CO., LTD.) 07 October 2013 (2013-10-07) claims, paragraphs [0076], [0111] | 1-13 |
| A | WO 2005/117169 A1 (MATSUSHITA ELECTRIC INDUSTRIAL CO., LTD.) 08 December 2005 (2005-12-08) claims | 1-13 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>**24 October 2022** | Date of mailing of the international search report<br>**08 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer |
| | Telephone No. |

Form PCT/ISA/210 (second sheet) (January 2015)

**INTERNATIONAL SEARCH REPORT**
Information on patent family members

International application No.

**PCT/JP2022/032881**

| Patent document cited in search report | | | Publication date (day/month/year) | Patent family member(s) | | | Publication date (day/month/year) |
|---|---|---|---|---|---|---|---|
| JP | 2015-028843 | A | 12 February 2015 | (Family: none) | | | |
| JP | 2013-206846 | A | 07 October 2013 | (Family: none) | | | |
| WO | 2005/117169 | A1 | 08 December 2005 | US | 2005/0266305 | A1 | |
| | | | | claims | | | |
| | | | | EP | 1753056 | A1 | |
| | | | | KR | 10-2006-0122953 | A | |
| | | | | CN | 1938882 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017090242 A1
- WO 2013151144 A1
- JP 2013145763 A